(19) Europäisches Patentamt
European Patent Office
Office européen des brevets

(11) EP 1 871 095 A1

(12) **EUROPEAN PATENT APPLICATION**
published in accordance with Art. 153(4) EPC

(43) Date of publication:
**26.12.2007 Bulletin 2007/52**

(21) Application number: **06731357.7**

(22) Date of filing: **31.03.2006**

(51) Int Cl.:
***H04N 5/20*** *(2006.01)* ***H04N 5/243*** *(2006.01)*

(86) International application number:
**PCT/JP2006/307409**

(87) International publication number:
**WO 2006/109703 (19.10.2006 Gazette 2006/42)**

(84) Designated Contracting States:
**DE FR GB**

(30) Priority: **12.04.2005 JP 2005114188**

(71) Applicant: **Olympus Corporation**
**Tokyo 151-0072 (JP)**

(72) Inventors:
- **SAMBONGI, Masao**
**1920062 (JP)**
- **UENO, Akira**
**7808023 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **IMAGING TAKING SYSTEM, AND IMAGE SIGNAL PROCESSING PROGRAM**

(57) The image taking system of the invention applies tone transformation processing to an image signal of an image taken through taking means (lens system 100, aperture 101 and CCD 102) while taking a taking situation into account. In the first embodiment, the image taking system comprises a taking situation assessment portion (108) adapted to make an assessment of a taking situation for the image, an amount-of-information change portion (107) adapted to change the amount of information of said image signal depending on the taking situation assessed at said taking situation assessment portion (108), and a tone transformation portion (110) adapted to implement tone transformation processing depending on tone transformation characteristics obtained using the image signal with the amount of information changed at the amount-of-information change portion (107).

FIG. 1

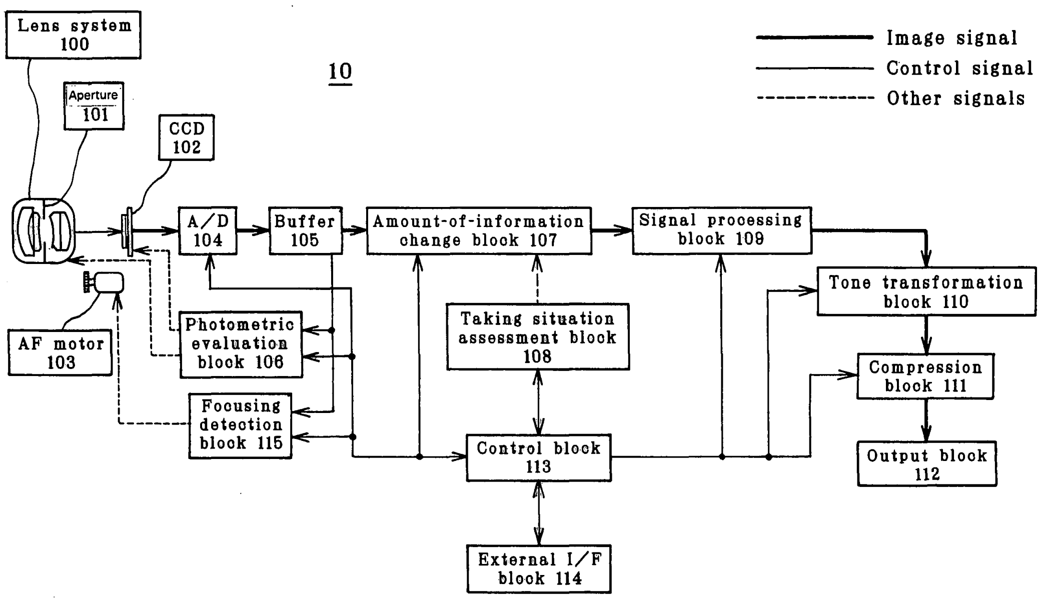




Printed by Jouve, 75001 PARIS (FR)

## Description

ART FIELD

The present invention relates generally to an image taking system adapted to apply tone transformation processing to image signals and an image signal processing program, and more particularly to an image taking system capable of generating high-quality image signals, especially with taking situations in mind, and an image signal processing program.

BACKGROUND ART

In current digital still cameras or video cameras, the tone widths (of the order of 10 to 14 bits) of signals in the input and processing systems are set wider than those of final output signals (usually 8 bits) for the purpose of averting an image quality deterioration by reason of shifts in digital signal processing. In that case, tone transformation must be implemented in such a way as to match with the tone width in the output system. So far, this has been done with fixed tone characteristics for standard scenes. Further, there has also been an adaptive transformation method proposed, which involves finding tone characteristics corresponding to a taking scene.

For instance, JP(A)2003-69821 discloses an example of tone transformation involving the estimation of a taking situation with weight given to a main subject. In that example, it is said that side effects such as noises are also hold back by placing a certain limit to the obtained tone characteristics. On the other hand, there has been another method proposed, which applies tone transformation independently to an image signal per area. For instance, Patent No. 3465226 discloses an example of tone transformation wherein an image signal is divided into areas on the basis of texture information, and adaptive tone transformation is applied to each area.

A problem with the conventional tone transformation relying upon fixed tone characteristics is that no proper image signals are obtained under substandard situations such as a back-light one. A problem with JP(A)2003-69821 is that no adequate improvement is achievable in a scene with a large light-and-shade difference, because tone transformation is applied to one single image signal with one single tone characteristic. With the method set forth in Patent No. 3465226, good enough improvements may prime facie be obtained in scenes with a large light-and-shade difference, because tone transformation is implemented depending on independent tone characteristics per area; however, the tone of shades often spreads out and the amount of information about half tone decreases, resulting in an unnatural-looking image.

In view of the aforesaid problems, the present invention has for its object to provide an image taking system adapted to apply tone transformation processing to an image signal, which is capable of efficiently generating high-definition image signals depending on a taking situation, and an image signal processing program.

SUMMARY OF THE INVENTION

(1) According to the first aspect of the invention, the above object is achieved by the provision of an image taking system adapted to apply tone transformation processing to an image signal of an image taken by an image taking means, characterized by comprising a taking situation assessment means adapted to assess a taking situation for said image, an amount-of-information change means adapted to change an amount of information of said image signal depending the taking situation assessed at said taking situation assessment means, and a tone transformation means adapted to implement tone transformation processing depending on tone transformation characteristics obtained using an image signal with an amount of information changed by said amount-of-information change means. The invention according to the first aspect is carried out in the first, the second, and the third embodiment shown in Figs. 1 to 13, respectively, wherein the taking situation assessment means is equivalent to the taking situation assessment block 108 shown in Figs. 1 and 3, the taking situation assessment block 1008 shown in Figs. 6 and 7, and the taking situation assessment block 1008 shown in Figs. 11 and 12; the amount-of-information change means is equivalent to the amount-of-information change block 107 shown in Fig. 1, the amount-of-information change block 1007 shown in Figs. 6 and 9, and the amount-of-information change block 2007a shown in Fig. 11; and the tone transformation means is equivalent to the tone transformation block 110 shown in Figs. 1 and 6, and the tone transformation block 2010 shown in Fig. 11.

According to the invention of the first aspect, the amount of information of the image signal is changed depending on the taking situation, and the tone transformation processing is implemented depending on the tone transformation characteristics obtained using an image signal with the amount of information changed. It is thus possible to carry out efficient tone transformation with good tradeoffs between processing time and high-definition images depending on a difference in the taking situations, for instance, depending on whether or not there is a taking situation having a large light-and-shade difference.

(2) According to the second aspect, the invention (1) is further characterized by further comprising a taking situation reception means adapted to receive from a user a taking situation setting at the time of taking said image, wherein said taking situation assessment means makes an assessment of a taking situation for said image depending on a taking situation received at said taking situation reception means.

The invention according to the second aspect (2) is carried out in the first embodiment shown in Figs. 1 to 5 or the second embodiment shown in Figs. 11 to 13, wherein the taking situation reception means is equivalent to the external I/F block 114 shown in Figs. 3 and 11; and the assessment of the taking situation for said image depending on the taking situation received at the said taking situation reception means is implemented at the taking condition acquisition block 200 and overall estimation block 204, 205 shown in Figs. 3 and 12(a).

According to the invention of the aspect (2), there is the taking situation acquired, that is preset by the user. It is this possible to use the taking condition preset by the user, thereby quickly acquiring the taking condition.

(3) According to the third aspect, the invention (2) is further characterized in that said taking situation assessment means makes an assessment of a taking situation from said image signal. The invention (3) is carried out in the first embodiment shown in Figs. 1 to 5 or the third embodiment shown in Figs. 1 to 13, wherein the assessment of the taking situation from the image signal is implemented at the overall estimation block 204 shown in Fig. 3 or the overall estimation block 205 shown in Fig. 12.

According to the invention of the aspect (3), the taking situation for the image signal is assessed from the image signal. It is thus possible to make an assessment of the taking situation even when the user does not set the taking situation, because the taking situation is assessed from the image signal.

(4) According to the fourth aspect, the invention (1) is further characterized in that in that said taking situation assessment means comprises a focusing position calculation means adapted to figure out a focusing position at a taking time and a luminance distribution calculation means adapted to figure out a luminance distribution of a taken image signal, wherein a taking situation is assessed on the basis of a focusing position figured out at said focusing position calculation means and a luminance distribution figured out at said luminance distribution calculation means.

The invention according to the fourth aspect is carried out in the first embodiment shown in Figs. 1 to 5 or the third embodiment shown in Figs. 11 to 13, wherein the focusing position calculation means is equivalent to the focusing position estimation block 201 shown in Figs. 3 and 12, and the luminance distribution calculation means is equivalent to the subject distribution estimation block 202 shown in Figs. 3 and 12. The assessment of the taking situation is implemented at the overall estimation block 204 shown in Fig. 3 or the overall estimation block 205 shown in Fig. 12.

According to the invention (4), the taking situation for the image signal is assessed by the focusing position calculation means and luminance distribution calculation means. It is thus possible to make a highly accurate assessment of the taking situation, because the taking situation is assessed from the focusing position and luminance distribution.

(5) According to the fifth aspect, the invention (1) is further characterized in that in that said taking situation assessment means comprises a focusing position calculation means adapted to figure out a focusing position at a taking time and a luminance distribution calculation means adapted to figure out a luminance distribution of a taken image signal, wherein a taking situation is assessed on the basis of a combination of classification by a focusing position figured out at said focusing position calculation means and classification by a luminance distribution figured out said luminance distribution calculation means.

According to the invention (5), the taking situation for the image signal is assessed on the basis of a combination of classification by the focusing position and classification by the luminance distribution. It is thus possible to make a highly accurate assessment of the taking situation because the taking situation is assessed by classification by the focusing position and luminance.

(6) According to the sixth aspect, the invention (1) is further characterized in that said taking situation assessment means makes an assessment of a taking situation on the basis of results of comparison of a shutter speed at a taking time and a luminance of a taken image with a given threshold value. The invention according to the sixth aspect is carried out in the first embodiment shown in Figs. 1 to 5. The assessment of the taking situation is implemented at the night scene estimation block 203 and overall estimation block 204 shown in Fig. 3.

According to the invention (6), the taking situation is assessed using information about the shutter speed at the taking time and the luminance of the image signal. It is thus possible to make a highly accurate assessment of the taking situation by shutter speed and luminance.

(7) According to the seventh aspect, the invention (1) is further characterized in that said taking situation assessment means comprises a first assessment portion adapted to make an assessment of a taking situation on the basis of whether or not a shutter speed at a taking time and a luminance of a taken image have a given relation to a given threshold value and a second assessment portion adapted to make an assessment of a taking situation after assessed at said first assessment portion and on the basis of a focusing position at a taking time and a luminance distribution of a taken image, wherein a taking situation is assessed by said first assessment portion and said second assessment portion.

The invention according to the seventh aspect is carried out in the first embodiment shown in Figs. 1 to 5, wherein the first assessment portion is equivalent to the night scene estimation block 203 and overall estimation block 204 shown in Fig. 2, and the second assessment portion is equivalent to the focusing position estimation block 201, subject distribution estimation block 202 and overall estimation block 204 shown in Fig. 3. Further, the assessment of the taking situation is implemented at the overall estimation block 204 shown in Fig. 3.

According to the invention (7), the taking situation is assessed, first using the shutter speed and luminance, and then using information about the focusing position and luminance distribution. It is thus possible to first make an assessment of whether the taking situation, for instance, is a night scene or not, thereby making an efficient assessment of the taking situation.

(8) According to the eighth aspect, the invention (1) is further characterized in that said amount-of-information change means is adapted to change a resolution of said image signal, thereby changing an amount of information of said image signal. The invention according to the aspect (8) is carried out in the third embodiment shown in Figs. 11 to 13, wherein changing the amount of information of the image signal by changing the resolution of the image signal is implemented at the amount-of-information change block 2007a shown in Fig. 11.

(9) According to the ninth aspect, the invention (8) is further characterized by further comprising a tone transformation characteristic calculation means adapted to figure out a first correction coefficient for implementing tone transformation from tone transformation characteristics obtained using an image signal with a resolution changed by said amount-of-information change means and change said calculated first correction coefficient to a second correction coefficient corresponding to a resolution of the image signal before said resolution is changed, wherein said tone transformation means implements tone transformation using said second correction coefficient. The invention according to the ninth aspect is carried out in the third embodiment shown in Figs. 11 to 13, wherein the tone transformation characteristic calculation means is equivalent to the correction coefficient calculation block 2007b and correction coefficient modification block 2007c shown in Fig. 11.

According to the inventions (8) and (9), the amount of information of the image signal is changed by changing the resolution of the image signal. It is thus possible to apply efficient tone transformation to the digital image signal, thereby obtaining high-definition image signals, because the resolution of the image signal is changed.

(10) According to the tenth aspect, the invention (1) is further characterized in that said amount-of-information change means is adapted to change a bit length of said image signal, thereby changing an amount of information of said image signal. The invention according to the 10$^{th}$ aspect is carried out in the first, and the second embodiment shown in Figs. 1 to 10. Changing the amount of information of the image signal by changing the bit length of the image signal is implemented at the amount-of-information change block 107 shown in Fig. 1, and the amount-of-information change block 1007 shown in Figs. 6 and 9.

According to the invention (10), the amount of information of the image signal is changed by charging its bit length. It is thus possible to apply efficient tone transformation to the digital image signal, thereby obtain a high-definition image signal, because of changing its bit length.

(11) According to the 11$^{th}$ aspect, the invention (1) is further characterized in that said taking situation assessment means is adapted to make an assessment of a taking situation for each of multiple areas forming said image, and said amount-of-information change means is adapted to change an amount of information of an image signal corresponding to said areas depending on a taking situation for each of said areas. The invention of this aspect is carried out in the second embodiment shown in Figs. 6 to 10. The assessment of the taking situation for each of multiple areas forming the image is implemented at the specific color detection block 300, shade detection block 301 and area estimation block 302 shown in Fig. 7 or the frequency calculation block 303 and area estimation block 304 shown in Fig. 8. Changing the amount of information of the image signal corresponding to said areas depending on the taking situation for each of said areas is implemented at the amount-of-information change block 107 shown in Fig. 6.

According to the invention (11), the taking situation is assessed for each area, thereby changing the amount of information of the image signal. It is thus possible to make a highly accurate assessment of the taking situation, thereby obtaining a high-definition image signal, because the taking situation is assessed for each area.

(12) According to the 12$^{th}$ aspect, the invention (11) is further characterized in that said taking situation assessment means is adapted to make an assessment of a taking situation by either one of color information found on the basis of said image signal and luminance information found on the basis of said image signal. The invention of this aspect is carried out in the second embodiment shown in Figs 6 to 10. The assessment of the taking situation by either one of color information found on the basis of said image signal and luminance information found on the basis of said image signal is implemented at the specific color detection block 300, shade detection block 301 and area estimation block 302 shown in Fig. 7.

According to the invention (12), the taking situation for each area is assessed using color information or luminance information. It is thus possible to make a quicker assessment of the taking situation for each area, because only color information or luminance information is used.

(13) According to the 13th aspect, the invention (11) is further characterized in that said taking situation assessment means is adapted to make an assessment of a taking situation for each of said areas depending on an amount of a high-frequency component of a spatial frequency in said areas. The invention (13) is carried out in the second embodiment shown in Figs. 6 to 10. The assessment of the taking situation for each of said areas depending on the amount of the high-frequency component of a spatial frequency in said areas is implemented at the frequency calculation block 303 and area estimation block 304 shown in Fig. 8.

According to the invention (13), the taking situation for each area is assessed using frequency information. It is thus possible to obtain a high-definition image signal depending on the characteristics of the image, because the assessment of the taking situation is implemented using the frequency information of the image.

(14) According to the 14th aspect, the invention (11) is further characterized in that said amount-of-information change means is adapted to change a bit length of the image signal corresponding to each of said multiple areas depending on a taking situation for each of said areas, thereby changing an amount of information of said image signal. The invention according to this aspect is carried out in the second embodiment shown in Figs. 6 to 10, wherein the bit length change means is equivalent to the amount-of-information change block 1007 shown in Figs. 6 and 9.

According to the invention (14), the bit length of the image signal is changed for each area. It is thus possible to apply efficient tone transformation to digital image signals, thereby obtaining high-definition image signals, because the bit length of the image signal is changed for each area.

(15) According to the 15th aspect, the invention (1) is further characterized by further comprises a means adapted to stay away from an amount-of-information change processing, wherein said means is controlled such that there is no processing by said amount-of-information change means. The invention according to this aspect is carried out in the first, the second, and the third embodiment shown in Figs. 1 to 13, wherein the means adapted to stay away from an amount-of-information change processing is equivalent to the control block 113, control block 1013 and control block 2013. According the invention (15), high-quality image signals or high processing speeds are obtainable without changing the amount of information depending on the situation.

(16) According to the 16th aspect, there is an image signal processing program provided, which is characterized by letting a computer implement a step of reading an image signal of an image therein, a step of making an assessment of a taking situation for said image, a step of changing an amount of information of said image signal depending on said assessed taking situation, and a step of implementing tone transformation processing depending on tone transformation characteristics obtained using the image signal with said amount of information changed. The invention according to this aspect is carried out in the first, the second, and the third embodiment.

(17) According to the 17th aspect, there is an image signal processing program provided, which is characterized by letting a computer implement a step of reading an image signal of an image therein, a step of making an assessment of a taking situation for each of multiple areas forming said image, a step of changing an amount of information of an image signal corresponding to each of said areas depending a taking situation for each of said areas, and a step of implementing tone transformation processing depending on tone transformation characteristics obtained using the image signal with said amount of information changed.

With the inventions (16) and (17), it is possible to let the computer implement the image signal processing on the program. It is thus possible to implement rapid yet accurate, high-definition image signal processing.

According to the present invention, it is possible to provide an image taking system adapted to apply tone transformation processing to an image signal, which makes the amount of information of the image signal variable depending on the taking situation, thereby efficiently obtaining high-definition image signals. It is also possible to achieve an image signal processing program on which a computer is capable of efficiently generating high-definition image signals.

## BRIEF DESCRIPTION OF THE DRAWINGS

Fig. 1 is illustrative of the arrangement of the first embodiment.

Fig. 2 is illustrative of a pattern for evaluation and photometry in the first embodiment.

Fig. 3 is illustrative of the arrangement of the taking situation assessment block in the first embodiment.

Fig. 4 is illustrative of how to estimate a taking scene in the first embodiment.

Fig. 5 is a flowchart representative of the processing steps in the first embodiment.

Fig. 6 is illustrative of the arrangement of the second embodiment.

Fig. 7 is illustrative of one arrangement of the taking situation assessment block in the second embodiment.

Fig. 8 is illustrative of another arrangement of the taking situation assessment block in the second embodiment.

Fig. 9 is illustrative of the arrangement of the amount-of-information change block in the second embodiment.

Fig. 10 is a flowchart representative of the processing steps in the second embodiment.
Fig. 11 is illustrative of the arrangement of the third embodiment.
Fig. 12 is illustrative of the arrangement of the taking situation assessment block in the third embodiment.
Fig. 13 is illustrative of how to figure out a resolution in the third embodiment.

BEST MODE FOR CARRYING OUT THE INVENTION

Several embodiments of the invention are now explained with reference to the drawings. Fig. 1 is illustrative of the arrangement of the first embodiment; Fig. 2 is illustrative of the divided pattern for evaluation and photometry; Fig. 3 is illustrative of the arrangement of the taking situation assessment block; Fig. 4 is illustrative of how to estimate a taking scene from AF information and AE information; and Fig. 5 is a flowchart illustrative of the processing steps implemented by the image taking system.

Fig. 1 is illustrative of the arrangement of the first embodiment comprising the inventive image taking system 10. An image taken via a lens system 100, an aperture 101 and a CCD 102 is converted at an A/D 104 into a digital signal. An image signal that has been converted at the A/D 104 into a digital signal is entered in an output block 112 such as a memory card by way of a buffer 105, an amount-of-information change block 107, a signal processing block 109, a tone transformation block 110 and a compression block 111. A photometric evaluation block 106 is connected to the aperture 101 and the CCD 102, and a focusing detection block 115 is connected to an AF motor 103. The buffer 105 is connected to the amount-of-information change block 107, photometric evaluation block 106 and focusing detection block 115.

A taking situation assessment block 108 is connected to the amount-of-information change block 107. A control block 113 is bidirectionally connected to the A/D 104, photometric evaluation block 106, focusing detection block 115, amount-of-information change block 107, taking situation assessment block 108, signal processing block 109, tone transformation block 110 and compression block 111 to bring processing at the respective blocks together. Further, an external I/F block 114 comprising a power source switch, a shutter button, and an interface for selecting various modes at the taking time, all not shown, is bidirectionally connected to the control block 113, too.

For each processing at the control block 113, A/D 104, photometric evaluation block 106, focusing detection block 115, amount-of-information change block 107, taking situation assessment block 108, signal processing block 109, tone transformation block 110, and compression block 111, a CPU mounted on the image taking system 10 implements it on the basis of an image signal processing program stored in an ROM or other memory while the necessary data are optionally read out of or written in an RAM or other storage.

The flow of signals in Fig. 1 is now explained. As the user sets taking conditions such as taking modes (automatic photography, scene photography, portrait photography, close-up photography, night scene photography, and stroboscopic flash photography), ISO sensitivity, shutter speed and stop, it permits the set taking conditions to be stored in the control block 113. The control block 113 forwards the set taking conditions to the taking situation assessment block 108. Afterwards, as the user gives a half push on the shutter button (not shown), it causes the image taking system 10 to implement pre-taking. As the pre-taking is done, an image taken by way of the lens system 100, aperture 101 and CCD 102 is quantized and converted at the A/D 104 into a digital signal that is then forwarded to the buffer 105 as an image signal. In the embodiment here, that image is quantized at the A/D 104 into 14 bits. The image signal within the buffer 105 is forwarded to the amount-of-information change block 107, photometric evaluation block 106 and focusing detection block 115.

At the photometric evaluation block 106, proper exposure is worked out with the set ISO sensitivity, the shutter speed to camera-shake limits, etc. in mind, so that exposure conditions such as those for the aperture 101 and the shutter speed of the CCD 102 are controlled. Further, at the photometric evaluation block 106, there is the parameter worked out for figuring out the AE information indicative of a luminance distribution, as will be described later. For that parameter in the embodiment here, there are the average luminance levels a1 to a13 of multiple areas upon defined by dividing the image to them.

Fig. 2 is illustrative of the divided pattern for evaluation and photometry; it is illustrative of the parameter for figuring out the AE information in the embodiment here. As shown in Fig. 2, the image is treated as being divided into multiple areas (13 in the embodiment here); a luminance level corresponding to each area is extracted out of the image signal to work out average luminance levels a1 to a13 that are the average of the luminance level in each area.

The focusing detection block 115 implements detecting an edge strength in the image signal, and controlling the AF motor 103 driving the lens system 100 such that the edge strength reaches a maximum. And the position of the lens system 100 when the edge strength is maximized is acquired as a focusing condition.

Then, as the user gives a full-push on the shutter button (not shown), it permits that information to be entered in the control block 113 via the external I/F block 114, allowing the image taking system 10 to implement full-taking. The signal of the image taken by the full-taking is forwarded to the buffer 105 as is the case with the pre-taking. The full-taking is implemented on the basis of the exposure condition determined at the photometric evaluation block 106 and the focusing condition found at the focusing detection block 115, and the exposure condition and the focusing condition are forwarded to the control block 113.

On the basis of the signal of the image taken by the full-taking, the photometric evaluation block 106 implements figuring out the values of the aforesaid average luminance levels a1 to a13. The image signal in the buffer 105 is forwarded to the amount-of-information change block 107. The control block 113 forwards to the taking situation assessment block 108 the taking condition, the average luminance levels a1 to a13 found at the photometric evaluation block 106, the exposure condition, and the focusing condition found at the focusing detection block 115.

The taking situation assessment block 108 implements assessing the taking situation about the whole screen on the basis of the forwarded taking condition, the average luminance levels a1 to a13, the exposure condition and the focusing condition. The assessed taking situation is forwarded to the amount-of-information change block 107.

On the basis of the assessment of the taking situation from the taking situation assessment block 108, the amount-of-information change block 107 implements changing the bit length across the screen of the image signal forwarded from the buffer 105 by means of bit shifting or the like. The image signal with the bit length changed is forwarded to the signal processing block 109. On the basis of control by the control block 113, the signal processing block 109 implements applying color transformation processing, enhancement processing or the like to the image signal, forwarding it to the tone transformation block 110.

On the basis of control by the control block 113, the tone transformation block 110 implements applying the tone transformation processing to the image signal while tone transformation characteristics are independently changed for each pixel or area, by means of a method of making a histogram locally flat or the like. In the embodiment here, the image signal with the amount of information changed at the amount-of-information change block 107 is used to figure out tone transformation characteristics for the application of tone transformation processing to that image signal having an amount of information changed at the amount-of-information change block 107.

For instance, the tone transformation characteristics may be figured out as described in the aforesaid Patent Publication 2. First, for each area in the image represented by the image signal that has an amount of information changed at the amount-of-information change block 107, a density histogram is prepared from an image signal corresponding to each area, and to what degrees the density value of that density histogram varies is figured out. Then, depending on the degree of variation of that density value, there is a clip value determined which governs the degree of smoothness of that density histogram. Then, that density histogram is clipped at that clip value to prepare a cumulative histogram from the density histogram after clipping. Finally, the cumulative histogram is applied as a density transformation curve to each pixel or area of the entered image signal to determine a correction coefficient for tone transformation, thereby figuring out the tone transformation characteristics.

The image signal, to which the tone transformation processing has been applied, is forwarded to the compression block 111. The compression block 111 implements compression processing or the like on the basis of control by the control block 113, forwarding the result of processing to the output block 112, at which the image signal is recorded and stored in a recording medium such as a memory card.

Fig. 3 is illustrative of one exemplary arrangement of the taking situation assessment block 108. The taking situation assessment block 108 comprises a taking condition acquirement block 200, a focusing position estimation block 201, a subject distribution estimation block 202, a night scene estimation block 203 and an overall estimation block 204. The control block 113 is bidirectionally connected to the taking condition acquisition block 200, focusing position estimation block 201, subject distribution estimation block 202 and night scene estimation block 203, and the taking condition acquisition block 200, focusing position estimation block 201, subject distribution estimation block 202 and night scene estimation block 203 are connected to the overall estimation block 204 that is in turn connected to the amount-of-information change block 107.

The taking condition acquisition block 200 implements acquiring information indicative of the taking condition set at the external I/F block 114, for instance, the sort of the taking mode (for instance, automatic photography, scene photography, portrait photography, close-up photography, night scene photography, and stroboscopic flash photography). The result of acquisition is forwarded to the overall estimation block 204.

The focusing position estimation block 201 implements acquiring the focusing condition determined at the focusing detection block 115 from the control block 113, and figuring out on the basis of the focusing condition a focusing position indicative of a position from the CCD 102 to a subject most in focus. And there is the AF information obtained with the calculated focusing position classified. For instance, there is the AF information obtained with the focusing position broken down into 5 m to ∞ (scene photography), 1 m to 5 mm (portrait photography), up to 1 m (close-up photography), etc. The result of classification is forwarded to the overall estimation block 204.

The subject distribution estimation block 202 implements acquiring the average luminance levels a1 to a13 figured out at the photometric evaluation block 106 as the parameter for figuring out the AE information. And on the basis of the acquired average luminance levels a1 to a13, there is the AE information figured out indicative of the luminance distribution. There are many possible ways of figuring out the AE information indicative of the luminance distribution; in the embodiment here, however, the AE information is expressed by evaluation parameters S1, S2 and S3 given in the form of equation (1) so that the evaluation parameters S1, S2 and S3 are figured out to figure out the AE information. The subject distribution estimation block 202 implements forwarding the figured-out AE information to the overall estimation block 204.

$$S_1 = |a_2 - a_3|$$

$$S_2 = \max(|a_4 - a_6|,\ |a_4 - a_7|)$$

$$S_3 = \max(a_{10},\ a_{11}) - \Sigma a_i/13 \qquad \cdots (1)$$

In equation (1), max () is a function indicative of the maximum value. The evaluation parameter S1 means a luminance difference between the right and the left at the middle; S2 means the larger of luminance differences between the upper middle of the inner periphery and the upper right and left of the inner periphery; and S3 means a difference between the larger of luminance differences between the upper right and left of the outer periphery and the average luminance across the screen.

The AE information may be figured out on the basis of an equation other than equation (1), on condition that it is indicative of a luminance distribution. The parameter for figuring out the AE information, too, is never limited to the average luminance levels a1 to a13 in the embodiment here; a parameter other than the average luminance levels a1 to a13 may just as well be figured out at the photometric evaluation block 106 from the image signal. For instance, as the parameter there may be other value used, which is calculated on a given calculation formula from the luminance level of each of areas to which the image is divided, not from the average of luminance levels.

On a given long exposure and when the average luminance level across the screen is below a given threshold value, the night scene estimation block 203 implements estimating the taken image to be a night scene one. The night scene estimation block 203 implements acquiring the average luminance levels a1 to a13 and exposure condition found at the photometric evaluation block 106, and estimating the taken image to be a night scene one on the basis of those. The result of this estimation is forwarded to the overall estimation block 204.

The overall estimation block 204 first implements judging whether the taking mode obtained at the taking condition acquisition block 200 is automatic photography or not. Note here that the automatic photography refers to the mode of photography where the user photographs a subject irrespective of what state the subject is in; it is the photographic mode of the taking system 10 taking the image of the subject while making an automatic estimation of its situation.

The overall estimation block 204 implements making an assessment of the taking situation by a different method depending on whether the taking mode obtained at the taking condition acquisition block 200 is the automatic photography or not. When the taking mode is assessed as being other than the automatic photography, the taking situation is assessed on the basis of the taking mode obtained at the taking condition acquisition block 200. That is, the taking mode set by the user is assessed as representing the taking situation. The result of this assessment is forwarded to the amount-of-information change block 107.

In the embodiment here, the image taking system 10 has, in addition to the automatic photography, the scene photography, portrait photography, close-up photography, night scene photography, stroboscopic flash photography and other photography set as the taking modes; however, the invention is never limited to such taking modes. There are some other possible taking modes for the image taking system 10, and they may be implemented with combinations of ISO sensitivity, shutter speed, stop, etc. that seem to be suitable at the time of taking the image of a subject while the state (taking scene) of that subject is considered in various ways, or with the image signal processed in a given mode.

Scene photography is the taking mode aiming at taking landscapes. Scene photography often brings much light-and-shade difference in an image, and the amount of information on half tone often decreases because the tone of shades with a narrow tone spreads out due to the tone transformation processing. For scene photography, therefore, the bit length set at the amount-of-information change block 107 is preferably long. For the scene photography in the embodiment here, the tone of the image signal is maintained at the amount-of-information change block 107 at the same 14 bits as quantized at the A/D 104.

Portrait photography is the taking mode aiming at taking figures. For portrait photography, how to express the tone of the face is important, although the light-and-shade difference in the image is not that large when compared with a landscape. Therefore, portrait photography need have not so much tone as scene photography has; to make sure some tone, however, the amount-of-information change block 107 implements changing the amount of information of the image signal to 12 bits, a lower tone than required for scene photography.

Close-up photography is the taking mode aiming at taking a subject close-up. For close-up photography, the amount-of-information change block 107 implements changing the amount of information of the image signal to 12 bits with general versatility in mind.

Night scene photography is the taking mode aiming at taking subjects in a dark place. In night scene photography, there are more shades: the amount of information on half tone often decreases because the tone of shades is spread out by tone transformation processing. For night scene photography, therefore, the bit length set at the amount-of-information change block 107 is preferably longer. For night scene photography in the embodiment here, the amount-of-information change block 107 implements maintaining the tone of the image signal at the same 14 bits as quantized at the A/D 104.

Stroboscopic flash photography is the taking mode aiming at taking scenes with the strobo flashed. In stroboscopic flash photography, there seems to be more shades: the amount of information on half tone often decreases because the tone of shades is spread out by tone transformation processing. For stroboscopic flash photography, therefore, the bit length set at the amount-of-information change block 107 is preferably longer. For stroboscopic flash photography in the embodiment here, the amount-of-information change block 107 implements maintaining the tone of the image signal at the same 14 bits as quantized at the A/D 104.

In the embodiment as described above, there is the image signal obtained that has an amount of information of 14 bits when quantized at the A/D 104; the tone of the image signal at the time of scene photography, night scene photography, and stroboscopic flash photography is maintained at the same 14 bits as quantized at the A/D 104. However, the amount of information of the image signal may be changed such that the amount-of-information change block 107 has a suitable amount of information depending on each taking mode. For instance, the amount-of-information change block 107 may as well implement changing the amount of information to 12 bits at the time of scene photography, night scene photography, and stroboscopic flash photography, and to 10 bits at the time of portrait photography.

Reference is then made to an embodiment of the invention wherein the taking mode obtained at the taking condition acquisition block 200 is automatic photography. As the taking mode obtained at the taking condition acquisition block 200 is judged as automatic photography, it permits the overall estimation block 204 to make an estimation of the taking situation on the basis of information from the focusing position estimation block 201, subject distribution estimation block 202 and night scene estimation block 203.

If the taken image is estimated at the night scene estimation block 203 to be a night scene one, the overall estimation block 204 then judges the taking situation to be night scene photography, and forwarding the information to the amount-of-information change block 107. When the taken image is estimated at the night scene estimation block 203 to be a night scene one, on the other hand, the overall estimation block 204 forms a judgment of the taking situation with the use of AF information from the focusing position estimation block 201 and AE information (estimation parameters S1, S2 and S3) from the subject distribution estimation block 202.

Fig. 4 is illustrative of the taking situation judged on the basis of the result of combining the AF information with the AE information at the overall estimation block 204, and the bit length set at the amount-of-information change block 107. At the overall estimation block 204, the AE information is sorted out depending on whether or not the evaluation parameter S3 is greater than a given threshold value Th1, whether or not the evaluation parameter S2 is greater than a given threshold value Th2, and whether or not the evaluation parameter S1 is greater than a given threshold value Th3.

If the amount of AF information is greater than 5 m, then the overall estimation block 204 judges the taking situation to be scene photography. Further, if the evaluation parameter S3 is greater than the given threshold value Th1, the overall estimation block 204 judges the taking situation to be scene photography with the sky above, and forwarding the information to the amount-of-information change block 107, because the upper area a10 or a11 of Fig. 2 has a luminance higher than the average luminance of the whole screen. Such a scene is considered to have a wide dynamic range; the amount-of-information change block 107 maintains the amount of information of the image signal at the same 14 bits as quantized at the A/D 104.

When the evaluation parameter S3 is not greater than the given threshold value Th1 even in an amount of information of greater than 5 m, on the other hand, the taking situation is judged to be scene photography with no or little sky above, and the information is forwarded to the amount-of-information change block 107. In that case, the main subject is thought to be a plant or building where there is not that much light-and-shade difference; the amount-of-information change block 107 implements changing the amount of information of the image signal to 12 bits as an example.

In an amount of AF information of greater than 1 m and less than 5 m, the overall estimation block 204 assesses the taking situation to be portrait photography. Further, if the evaluation parameter S2 is greater than the given threshold value Th2, it then judges the taking situation to be portrait photography for one figure, because, as shown in Fig. 2, there is a luminance difference between a4 at the upper center and a6, a7 at the upper left and right, and forwards the information to the amount-of-information change block 107. For portrait photography for one figure, the tone of the face becomes important, although it need have not so much tone as the scene with the sky above has; the amount-of-information change block 107 implements changing the amount of information of the image signal to 12 bits as an example.

On the other hand, when the evaluation parameter S2 is not greater than the given threshold value Th2 even in an amount of AF information of greater than 1 m and less than 5 m, the overall estimation block 204 judges the taking situation to be portrait photography for two or more figures, and forwards the information to the amount-of-information change block 107. In portrait photography for multiple figures, face size is often small; the tone of the faces is not that important, allowing the amount-of-information block 107 to change the amount of information of the image signal to 10 bits as an example.

Finally, at an amount of AF information of less than 1 m, the overall estimation block 204 judges the taking situation to be close-up photography. Further, if the evaluation parameter S1 is greater than the given threshold value Th3, it then judges the taking situation to be close-up photography for two or more objects because there is a luminance difference between the middle left and right, forwarding the information to the amount-of-information change block 107. In close-up photography for multiple objects, there is often a noticeable light-and-shade difference in them; the amount-of-information change block 107 implements changing the amount of information of the image signal to 12 bits as an example.

On the other hand, when the evaluation parameter S1 is not greater than the given threshold value Th3 even in an amount of AF information of less than 1 m, the overall estimation block 204 works judging the taking situation to be close-up photography for one single object, and forwarding the information to the amount-of-information change block 107. In close-up photography for one single object, the necessary light-and-shade difference is considered to be not that large as compared with close-up photography for multiple objects; the amount-of-information change block 107 works changing the amount of information of the image signal to 10 bits as an example.

In the embodiment as described above, there is the image signal obtained that has an amount of information of 14 bits when quantized at the A/D 104; the tone of the image signal at the time of scene photography with the sky above is maintained at the same 14 bits as quantized at the A/D 104. However, the amount of information of the image signal may be changed such that the amount-of-information change block 107 has a suitable amount of information depending on each taking mode. For instance, the amount-of-information change block 107 may as well implement changing the amount of information to 12 bits at the time of scene photography with the sky above, to 10 bits at the time of scene photograph with no or little sky above, portrait photography for one figure, and close-up photography for multiple objects, and to 8 bits at the time of portrait photography for multiple figures, and close-up photography for one single object.

With the arrangement wherein the bit length of the image signal is changed depending on the taking situation, even image signals having a striking light-and-shade difference or having a lot more shades are allowed to have high definitions by increasing the bit length, and the information on half tone can be maintained to some degrees even after the application of tone transformation processing to them. On the other hand, image signals having not that much light-and-shade difference and containing lesser shades hardly suffer from a decrease in the amount of information on half tone; if the bit length is made short, there is then no need of using signal conductors for unnecessary bits, resulting in power savings.

As described above, by allowing the amount-of-information change block 107 to change the amount of information of the image signal obtained in a certain taking situation depending on that taking situation, there is an image signal generated, that has a suitable amount of information depending on the taking situation. This in turn makes it possible to implement processing using an image signal suitable for each taking situation. Further, in order to obtain an image signal having an amount of information depending on a particular taking situation, the taking situation is judged for each taking operation to change the amount of information of the image signal obtained in one taking operation depending on that taking situation; there is no need of increasing the amount of information of the image signal by implementing multiple taking operations, or no need of using any particular imaging device or the like for obtaining an image signal having a different amount of information depending on the taking situation.

In the arrangement explained with reference to Fig. 4, it is noted that at the taking time AF information is combined with AE information to form a judgment of the taking situation. According to the invention, instead, calculation may as well be implemented on calculation information with the focusing position or AE information preset as parameters to judge the taking situation using the result of that calculation.

In the embodiment as described above, a series of processing is applied to images taken by the image taking system 10 comprising taking means such as the lens system 100, aperture 101 and CCD 102. However, the invention is not necessarily limited to that embodiment. For instance, the image taking system 10 in a computer form may be designed such that signals of an image taken by an external taking means such as CCD are acquired as unprocessed or raw data, information at the taking time (taking condition) is acquired as header information, and processing is implemented by way of the photometric evaluation block 106, focusing detection block 115, amount-of-information change block 107, taking situation assessment block 108, signal processing block 109, tone transformation block 110, compression block 111 and control block 113.

Fig. 5 is a flowchart about processing implemented at the image taking system 10 in the first embodiment of the invention. At step S1, the image signals of an image are read in. At step S2, the taking situation is acquired through the taking situation assessment block 108. Then, at step S3, the bit length of the image signals is changed by the amount-of-information change block 107. At step S4, a given signal processing is implemented by the signal processing block 109. Subsequently, at step S5, tone transformation processing is implemented by the tone transformation block 110. At step S6, whether or not all pixels are processed is judged by the control block 113. If the result of this judgment is NO, then the processing at step S4 is resumed to repeat a loop processing of steps S4, S5 and S7 for unprocessed pixels until all the pixels are processed. If the result of the aforesaid judgment is YES, it means that job is all done.

The second embodiment of the invention is now explained. Fig. 6 is illustrative of the arrangement of the second embodiment; Figs. 7 and 8 are illustrative of the arrangements of the taking situation assessment block; Fig. 9 is illustrative of the arrangement of the amount-of-information change block; and Fig. 10 is a flowchart illustrative of processing steps at the image taking system of the second embodiment.

Fig. 6 is illustrative of the arrangement of the second embodiment, showing the arrangement that the image taking system 20 of the invention has. Like names and numerals are given to like components in the first embodiment. The second embodiment is now explained primarily with reference to differences with the first embodiment.

An image taken via the lens system 100, aperture 101 and CCD 102 is converted at the A/D 104 into a digital signal. An image signal that has been converted at the A/D 104 into the digital signal is entered in the output block 112 such as a memory card by way of the buffer 105, amount-of-information change block 1007, signal processing block 109, tone transformation block 110 and compression block 111.

The buffer 105 is connected to the photometric evaluation block 106, focusing detection block 115, amount-of-information change block 1007 and a "culling" block 500. The culling block 500 is connected to an interpolation block 501. The interpolation block 501 is connected to the taking situation assessment block 1008. The taking situation assessment block 1008 is connected to the amount-of-information change block 1007. The control block 1013 is bidirectionally connected to the photometric evaluation block 106, focusing detection block 115, amount-of-information change block 1007, taking situation assessment block 1008, signal processing block 109, tone transformation block 110, compression block 111, culling block 500 and interpolation block 501 to bring processing at the respective blocks together.

For each processing at the control block 113, A/D 104, photometric evaluation block 106, focusing detection block 115, amount-of-information change block 1007, taking situation assessment block 108, signal processing block 109, tone transformation block 110, compression block 111, culling block 500 and interpolation block 501, a CPU mounted on the image taking system 20 implements it on the basis of an image signal processing program stored in an ROM or other memory while the necessary data are optionally read out of or written in an RAM or other storage.

The flow of signals in Fig. 6 is now explained. As the user gives a full push on a shutter button by way of an external I/F block 114, it causes an image to be full taken, forwarding image signals to the buffer 105. The image signals in the buffer 105 are forwarded to the culling block 500 at which they are culled out at a given interval, and then forwarded to the interpolation block 501.

When the image taken by the CCD 102 is a Bayer type single-chip signal, $2\times2$ pixels are culled out as a basic block unit at the culling block 500. In the embodiment here, for instance, only left upper 2X2 pixels out of 16X 16 pixels are read in, so that the image signal is reduced down to a $(1/8)\times(1/8)$ size. At the image taking system 20, the taken image is thus treated as a plurality of areas to which it is divided and which are composed of $16\times16$ pixels. At the interpolation block 501, RGB three-chip image signals are generated by linear interpolation processing for an image signal culled out at the culling block 500, and then forwarded to the taking situation assessment block 1008.

At the taking situation assessment block 1008, information such as flesh colors, shades, and frequency components is figured out of three-chip signals from the interpolation block 501. Thereafter, the culled image signals are labeled on the basis of that information, and the labeled information is forwarded to the amount-of-information change block 1007. When the image signal is reduced down to a (1/8) x(1/8) size at the culling block 500, it means that labeling takes place for each block unit of $8\times8$ with respect to the original image signal, that is, for each pixel unit of $16\times16$.

On the basis of the labeled information from the taking situation assessment block 1008, the amount-of-information change block 1007 implements changing the bit length per area of the image signal forwarded from the buffer 105. The image signal with the bit length changed per area is forwarded to the signal processing block 109. On the basis of control by the control block 1013, the signal processing block 109 implements applying known color transformation processing, enhancement processing or the like to the image signal, and forwarding it to the tone transformation block 110.

On the basis of control by the control block 1013, the tone transformation block 110 works applying the tone transformation processing to the image signal while tone transformation characteristics are independently changed for each pixel or area. In the embodiment here, too, the image signal with the amount of information changed at the amount-of-information change block 1007 is used to figure out tone transformation characteristics for the application of tone transformation processing to that image signal having an amount of information changed at the amount-of-information change block 1007. The image signal, to which the tone transformation processing has been applied, is forwarded to the compression block 111. The compression block 111 implements compression processing or the like on the basis of control by the control block 113, forwarding the result of processing to the output block 112, at which the image signal is recorded and stored in a recording medium such as a memory card.

Fig. 7 is illustrative of one exemplary arrangement of the taking situation assessment block 1008. The taking situation assessment block 1008 comprises a specific color detection block 300, a shade detection block 301 and an area estimation block 302. The interpolation block 501 is connected to the specific color detection block 300 and shade detection block 301, and the specific color detection block 300 and shade detection block 301 are connected to the area estimation block 302. The area estimation block 302 is connected to the amount-of-information change block 1007.

The control block 1013 is bidirectionally connected to the specific color detection block 300, shade detection block 301 and area estimation block 302. The specific color detection block 300 implements reading an RGB three-chip image signal from the interpolation block 501, and converting it into Cb, Cr signals for a given space, for instance, such a YCbCr space as represented by equation (2).

$$Cb = -0.16874R - 0.33126G + 0.50000B$$
$$Cr = 0.50000R - 0.41869G - 0.08131B \quad \cdots (2)$$

In equation (2), R, G and B stand for an image signal for R, an image signal for G and an image signal for B, respectively. The calculated color difference signals Cb, Cr are averaged in a basic block having a 2×2 pixel unit. By a specific threshold processing, only a specific color area is extracted from the color difference signals Cb, Cr in the basic block. The specific color here is understood to refer to flesh color, sky blue, green, etc. The result of extraction is labeled in a block unit having 2X2 pixels with respect to the culled three-chip image signals for forwarding to the area estimation block 302. For the label, for instance, numeral 1 is given to a flesh color area; 2 to a sky blue area; 3 to a green area; and 0 to the rest. The shade detection block 301 then implements reading RGB three-chip image signals out of the interpolation block 501, and converting them into a luminance signal Y as represented by equation (3).

$$Y = 0.29900R + 0.58700G + 0.11400B \quad \cdots (3)$$

The luminance signal Y calculated from equation (3) is averaged in a basic block having a 2x2 pixel unit. The luminance signal Y in the basic block is such that an area smaller than the given threshold value is extracted as the shade area. This result is labeled on the culled three-chip image signal in a block unit having 2x2 pixels, and forwarded to the area estimation block 302. For the label, for instance, numeral 4 is given to the shade area, and 0 is given to the rest.

On the basis of information from the specific color detection block 300 and shade detection block 301, the area estimation block 302 provides label information to each area. For the label information, for instance, numeral 1 is given to a flesh color area; 2 to a sky blue area; 3 to a green area; 4 to a shade area; 5 to a flesh color plus shade area; 6 to a sky blue plus shade area; 7 to a green plus shade area; and 0 to the rest. Such label information is forwarded to the amount-of-information change block 1007.

In the embodiment here, the taking situation is assessed using color information and luminance information found from image signals; however, how to assess the taking situation is not limited to that. For instance, the taking information may be assessed from only color information or luminance information or, alternatively, it may be assessed from other information than color information or luminance information, which may be found from the image signals as well. For instance, frequency information may be found from the image signals as shown in Fig. 8, and they may be used to assess the taking situation.

Fig. 8 is illustrative of another arrangement of the taking situation assessment block 1008. The taking situation assessment block 1008 comprises a frequency calculation block 303 and an area estimation block 304. The interpolation block 501 is connected to the frequency calculation block 303. The frequency calculation block 303 is connected to the area estimation block 304, and the area estimation block 304 is connected to the amount-of-information change block 1007. The control block 1013 is bidirectionally connected to the frequency calculation block 303 and amount-of-information change block 1007.

The frequency calculation block 303 implements reading RGB three-chip image signals from the interpolation block 501 in a given block size, for instance, a block having an 8×8 pixel unit so that, at the image taking system 20, the taken image is treated as multiple areas to which it is divided and which is made up of 64×64 pixels of which the original image is composed. The read block in an 8×8 pixel unit is transformed by DCT (discrete cosine transform) into a frequency component.

The amount of a high-frequency component of each block is found from the aforesaid frequency component, and forwarded to the area estimation block 304. At the area estimation block 304, a label proportional to the amount of the high-frequency component is given to the area corresponding to each block, and that label is forwarded to the amount-of-information change block 1007. Thus, the area estimation block 304 makes an assessment of the taking situation of each area in terms of the amount of the high-frequency component per area for labeling. It is noted that for transformation into the frequency component, not only DCT but any desired transform such as Fourier transform or Wavelet transform may also be used.

In the embodiment here, the taking situation assessment block 1008 thus implements making an assessment of whether each area is a flesh color area, a sky blue area, a green area, a shade area, a flesh color plus shade area, a sky blue plus shade area, a green plus shade area, or the rest or finding the high-frequency component of each area, thereby giving the label to each area for the assessment of the taking situation per area.

Fig. 9 is illustrative of one exemplary arrangement of the amount-of-information change block 1007. The amount-of-information change block 1007 comprises an area dividing block 400, a buffer A401, a bit length change block 402 and a buffer B403. The buffer 105 and taking situation assessment block 1008 are connected to the area dividing block 400, and the area dividing block 400 is connected to the buffer A401. The buffer A401 is connected to the bit length change block 402, and the bit length change block 402 is connected to the buffer B403. The buffer B403 is connected to the signal processing block 109. The control block 1013 is connected to bidirectionally connected to the area dividing block 400 and bit length change block 402.

On the basis of the label information forwarded from the taking situation assessment block 1008, the area dividing block 400 implements dividing the image signal in the buffer 105 into the respective areas. The divided image signal is forwarded to the buffer A401. The bit length change block 402 implements changing the bit length for each of the divided areas by means of bit shifting or the like so that the amount of information of the image signal is changed for each of the divided areas.

For instance, with an image signal corresponding to the area having a label indicative of the shade area, the tone of the shade often spreads out upon tone transformation processing; the longer the bit length, the more preferable. In the embodiment here, with an image signal corresponding to the area having a label indicative of the shade area, the amount-of-information change block 1007 keeps the tone of that image signal at the same 14 bits as quantized at the A/D 104. With a bright area having a label indicative of the sky blue area, the amount-of-information change block 1007 changes the amount of information of the image signal corresponding to that area to 10 bits as an example. With an image signal corresponding to an area having a label indicative of an area that is neither the shade area nor the sky blue area, the amount-of-information change block 1007 changes the amount of information of that image signal to 12 bits in consideration of general versatility.

In labeling with the amount of the high-frequency component, the more the high-frequency component, the finer the structure of the labeled area often becomes; there is often a large light-and-shade difference. In other words, the longer the bit length, the more preferable. In the embodiment here, with an image signal corresponding to the area having a label indicative of the shade area, the amount-of-information change block 1007 keeps the tone of that image signal at the same 14 bits as quantized at the A/D 104. With an image signal having a label indicative of an area containing a high-frequency component in a smaller amount, the amount-of-information change block 1007 changes the amount of information of that image signal to 12 bits in consideration of general versatility.

The image signal with the bit length changed per area is forwarded to the buffer B403, from which it is forwarded to the signal processing block 109.

With the arrangement wherein the bit length of the image signal corresponding to each area is changed depending on the taking situation, even image signals having a striking light-and-shade difference or having a lot more shades are allowed to have high definitions by increasing the bit length, and the information on half tone can be maintained to some degrees even after the application of tone transformation processing to them. On the other hand, image signals having not that much light-and-shade difference and containing lesser shades hardly suffer from a decrease in the amount of information on half tone; if the bit length is made short, there is then no need of using signal conductors for unnecessary bits, resulting in power savings.

In the embodiment as described above, a series of processing is applied to images taken by the image taking system 20 comprising taking means such as the lens system 100, aperture 101 and CCD 102. However, the invention is not necessarily limited to that embodiment. For instance, the image taking system 20 in a computer form may just as well be designed such that signals of an image taken by an external taking means such as CCD are acquired as unprocessed or raw data, and processing is implemented by way of the amount-of-information change block 1007, taking situation assessment block 1008, signal processing block 109, tone transformation block 110, compression block 111 and control block 1013.

Fig. 10 is a flowchart about processing implemented at the image taking system 20 in the second embodiment of the invention. At step S1, the image signals of an image are read in. At step S2, the taking situation is acquired through the taking situation assessment block 1008. Then, at step S10, the image signal is divided into areas by the amount-of-information change block 1007, and further at step S3, the bit length of the image signal corresponding to each area is changed by the amount-of-information change block 1007 depending on the taking situation for each area. Subsequently, at step S4, a given signal processing is implemented by the signal processing block 109.

Subsequently, at step S5, tone transformation processing is implemented by the tone transformation block 110. At step S11, whether or not all pixels are processed is judged by the control block 1013. If the result of this judgment is NO, then the processing at step S10 is resumed to repeat a loop processing of steps S10, S3-S5 and S11 for unprocessed pixels until all the pixels are processed. If the result of the aforesaid judgment is YES, it means that job is all done.

The third embodiment of the invention is now explained. Fig. 11 is illustrative of the arrangement of the third embodiment; Fig. 12 is illustrative of the arrangement of the taking situation acquisition block; and Fig. 13 is illustrative of how to figure out resolution. Like names and numerals are given to like components in the first and second embodiments. The third embodiment is now explained primarily with reference to differences with the first and second embodiments.

An image taken via the lens system 100, aperture 101 and CCD 102 is converted at the A/D 104 into a digital signal. The signal from the A/D 104 is connected to the output block 110 such as a memory card by way of the buffer 105, signal processing block 109, tone transformation block 110 and compression block 111. The photometric evaluation block 115 is connected to the aperture 101 and CCD 102. The focusing detection block 115 is connected to the AF motor 103. The buffer 105 is connected to the photometric evaluation block 106.

The taking situation assessment block 2008 is connected to the amount-of-information change block 2007a. The resolution change block 2007a is connected to the correction coefficient calculation block 2007b, and the correction coefficient calculation block 2007b is connected to the correction coefficient modification block 2007c. The correction coefficient modification block 2007c is connected to the tone transformation block 2010. The control block 2013 is bidirectionally connected to the A/D 104, photometric evaluation block 106, focusing detection block 115, signal processing block 109, amount-of-information change block 2007a adapted to implement the resolution change according to the invention, correction coefficient calculation block 2007b, correction coefficient modification block 2007c, taking situation assessment block 2008, tone transformation block 2010, compression block 111 and output block 112 to bring processing at the respective block together. Further, the external I/F block 114 comprising a power source switch, a shutter button, and an interface for selecting various modes at the taking time, all not shown, is bidirectionally connected to the control block 2013, too.

For each processing at the control block 2013, A/D 104, photometric evaluation block 106, focusing detection block 115, amount-of-information change block 2007a, correction coefficient calculation block 2007b, correction coefficient modification block 2007c, taking situation assessment block 2008, signal processing block 109, tone transformation block 2010, and compression block 111, a CPU mounted on the image taking system 30 implements it on the basis of an image signal processing program stored in an ROM or other memory while the necessary data are optionally read out of or written in an RAM or other storage.

The flow of signals in Fig. 11 is now explained. As the user sets taking conditions such as image taking modes (automatic photography, scene photography, portrait photography, close-up photography, night scene photography, and stroboscopic flash photography), ISO sensitivity, shutter speed and stop, it permits the set taking conditions to be stored in the control block 2013. The control block 2013 forwards the set taking conditions to the taking situation assessment block 2008. Afterwards, as the user gives a half push on the shutter button, it causes the image taking system 30 to implement pre-taking. As the pre-taking is done, an image taken by way of the lens system 100, aperture 101 and CCD 102 is quantized at the A/D 104 into a digital signal that is then forwarded to the buffer 105 as an image signal. The image signal within the buffer 105 is forwarded to the photometric evaluation block 106.

At the photometric evaluation block 106, the aperture 101, the electronic shutter speed of CCD 102, etc. are controlled, and the parameter for figuring out the AE information is figured out, as in the first embodiment. Further, the focusing detection block 115 controls the AF motor 103 for driving the lens system 100 to acquire the position of the lens system 100 as a focusing condition, as in the first embodiment.

Then, as the user gives a full-push on the shutter button, it permits that information to be entered in the control block 2013 via the external I/F block 114, allowing the image taking system 30 to implement full-taking. The signal of the image taken by the full-taking is forwarded to the buffer 105 as is the case with the pre-taking. The full-taking is implemented on the basis of the exposure condition determined at the photometric evaluation block 106 and the focusing condition found at the focusing detection block 115, and the exposure condition and the focusing condition are forwarded to the control block 2013.

On the basis of the signal of the image taken by the full-taking, the photometric evaluation block 106 implements figuring out the values of the aforesaid average luminance levels a1 to a13, as in the first embodiment. The control block 2013 forwards to the taking situation assessment block 2008 the taking condition, the average luminance levels a1 to a13 found at the photometric evaluation block 106, the exposure condition, and the focusing condition found at the focusing detection block 115. The image signal in the buffer 105 is forwarded to the signal processing block 109. On the basis of control by the control block 2013, the signal processing block 109 implements applying color conversion processing, enhancement processing and so on to the image signal, and the obtained image signal is forwarded to the amount-of-information change block 2007a, taking situation acquisition block 2008 and tone transformation block 2010.

The taking situation assessment block 2008 assesses the taking situation on the basis of the forwarded taking condition, the average luminance levels a1 to a13, the exposure condition and the focusing condition. The assessed taking situation is forwarded to the amount-of-information change block 2007a. On the basis of the taking situation from the taking situation assessment block 2008, the amount-of-information change block 2007a implements changing the resolution of the image signal forwarded from the buffer 105. The image signal with the resolution changed is forwarded to the correction coefficient calculation block 2007b. Changing the resolution may be implemented in various known ways. For instance, the resolution may be changed as follows. When the resolution is changed to 1/n, the image signal is divided into multiple blocks, each made up of n×n pixels. And then, n×n low-pass filters are applied to the image signal in each block composed of n×n pixels, thereby figuring out the pixel value representative of each block. By the aforesaid processing, the image signal is converted into an image signal having a resolution of 1/n represented by the calculated pixel value. Use may also be made of other resolution change methods such as a bilinear method or bicubic method. The resolution may also be changed by culling pixels.

At the correction coefficient calculation block 2007b, the image signal with the amount of information changed at the amount-of-information change block 2007a is used to figure out tone transformation characteristics. The calculation of the tone transformation characteristics may be implemented in much the same way as described in the first embodiment; a correction coefficient that is applied to each pixel of the image signal with the resolution changed for tone transformation is figured out as the first correction coefficient. The calculated first correction coefficient is forwarded to the correction coefficient modification block 2007c.

The thus calculated first correction coefficient is now corresponding to the image signal with the resolution changed at the amount-of-information change block 2007a, and so the correction coefficient modification block 2007c implements applying interpolation (extension) to the first correction coefficient (extension) in such a way as to correspond to the resolution of the original image signal (before the resolution is changed at the amount-of-information change block 2007a). The second correction coefficient obtained by the interpolation (extension) of the first correction coefficient is forwarded to the tone transformation block 2010.

At the tone transformation block 2010, the forwarded second correction coefficient is used to apply tone transformation processing to the original signal produced out of the signal processing block 109. The image signal, to which the tone transformation processing has been applied, is forwarded to the compression block 111 where known compression processing or the like is applied to it on the basis of control by the control block 2013, and then forwarded to the output block 112. At the output block 112, the image signal is recorded and stored in a memory card or other medium.

Fig. 12(a) is illustrative of one exemplary arrangement of the taking situation assessment block 2008. The taking situation assessment block 2008 comprises a taking condition acquisition block 100, a focusing position estimation block 201, a subject distribution estimation block 202 and an overall estimation block 205. The signal processing block 109 is connected to the subject distribution estimation block 202. The control block 2013 is bidirectionally connected to the taking condition acquisition block 200, focusing position estimation block 201, subject distribution estimation block 202 and overall estimation block 205, and the taking condition acquisition block 200, focusing position estimation block 201 and subject distribution estimation block 202 are connected to the overall estimation block 205. The overall estimation block 205 is connected to the resolution change block 2007a.

The taking condition acquisition block 200 implements acquiring information indicative of the taking condition set at the external I/F block 114, for instance, the sort of the taking mode (for instance, automatic photography, scene photography, portrait photography, close-up photography, night scene photography, and stroboscopic flash photography). The result of acquisition is forwarded to the overall estimation block 205.

The focusing position estimation block 201 implements acquiring the focusing condition determined at the focusing detection block 115 from the control block 2013, and figuring out on the basis of the focusing condition a focusing position indicative of a position from the CCD 102 to a subject most in focus. And there is the AF information obtained with the calculated focusing position classified. For instance, there is the AF information obtained with the focusing position broken down into 5 m to ∞ (scene photography), 1 m to 5 m (portrait photography), up to 1 m (close-up photography), etc. The result of classification is forwarded to the overall estimation block 204.

The subject distribution estimation block 202 implements acquiring the average luminance levels a1 to a13 figured out at the photometric evaluation block 106 as the parameter for figuring out the AE information, and figuring out the AE information indicative of the luminance distribution, as in the first embodiment. The subject distribution estimation block 202 then sends the calculated AE information to the overall estimation block 205.

The overall estimation block 205 first judges whether the taking mode obtained at the taking condition acquisition block 200 is automatic photography or not.
The overall estimation block 205 forms a judgment of the taking situation by a different method depending on whether the taking mode obtained at the taking condition acquisition block 200 is the automatic photography or not.

With the taking mode assessed as being other than the automatic photography, the overall estimation block 205 assesses the taking situation on the basis of the taking mode obtained at the taking condition acquisition block 200. That is, the taking mode set by the user is assessed as representing the taking situation. The result of this assessment is forwarded to the amount-of-information change block 2007a. In the image taking system 30 in the embodiment here, too, there is not only automatic photography but also scene, portrait, close-up, night scene, and stroboscopic flash photography available as in the first embodiment of the invention; however, the invention is never limited to them.

In consideration of a balance between processing time and images of higher quality, the amount-of-information change block 2007a implements changing the resolution of the image signal to what is considered optimum depending on the kind of the taking mode, thereby changing the amount of information of the image signal. One example is given below. For scene photography, the rendering of details becomes important; the amount-of-information change block 2007a is designed such that the resolution changes not that much from that of the original image. For instance, image size is changed to about 1/4. For portrait photography, the rendering of a figure's face becomes important. In ordinary portrait photography, the proportion of an image occupied by the face is relatively large; the amount-of-information change block 2007a implements changing the image size to about 1/10. In close-up photography, the amount-of-information change block 2007a implements changing the image size to for instance about 1/4 in consideration of general versatility. In night scene photography or stroboscope flash photography, there is no need of a lot more resolution change, because of the need of maintaining an increased amount of information. For instance, the image size is changed to about 1/4.

Reference is then made to the case where the taking mode obtained at the taking condition acquisition block 200 is automatic photography. With the taking mode obtained at the taking condition acquisition block 200 assessed as automatic photography, the overall estimation block 205 assesses the taking situation on the basis of AF information from the focusing position estimation block 201 and AE information from the subject distribution estimation block 202.

In the same way as in the first embodiment, the overall estimation block 205 judges the taking situation as being portrait photography for one single figure or multiple figures. In consideration of a balance between processing time and images of higher quality, the amount-of-information change block 2007a implements changing the resolution of the image signal to what is considered optimum depending on the kind of the taking mode. One example is given below. In portrait photography for one figure, the proportion of the face in an image is relatively large; the amount-of-information change block 2007a implements changing image size to for instance about 1/10. In portrait photography for multiple figures, on the other hand, the amount-of-information change block 2007a implements changing the image size to for instance about 1/4, because the faces are often small. With the AF information indicative of a taking situation other than that represented by 1 m to 5 m, the amount-of-information change block 2007a implements changing the image size to for instance about 1/4 in consideration of general versatility.

In the embodiment of Fig. 12(a), a combination of AF information and AE information found from within the image signal is used for the assessment of the taking situation; however, the invention is never limited to that. For instance, calculation information preset with the focusing position or AE information as a parameter may be used for calculation so that the result of that calculation is used to assess the taking situation. It is also possible to make an assessment of the taking situation from information from the image signal other than color information or luminance information. For instance, frequency information may just as well be used, as shown in the arrangement of Fig. 12(b).

Fig. 12(b) is illustrative of another exemplary arrangement of the taking situation assessment block 2008 that comprises a frequency calculation block 303. The signal processing block 109 is connected to the frequency calculation block 303. The control block 2013 is bidirectionally connected to the frequency calculation block 303 that is in turn connected to the amount-of-information change block 2007a.

The frequency calculation block 303 implements reading an image signal from the signal processing block 109 in a given area (block) size, for instance, an 8X8 pixel unit, and converting the read block into a frequency component as in the second embodiment. The frequency calculation block 303 then implements forwarding the converted frequency component to the amount-of-information change block 2007. By finding the frequency component per block in this way, the frequency calculation block 303 makes an assessment of the taking situation per block in terms of the frequency component.

The amount-of-information change block 2007a implements changing the resolution of the image signal according to a given rule to change the amount of data of the image signal. Fig. 13 is illustrative of the rule by which the resolution of the image signal is changed at the amount-of-information change block 2007a, with a frequency component as abscissa and a changed resolution as ordinate. When the maximum value of the frequency component of the image is fm as shown in Fig. 13, the resolution (reduction rate) of the image is set according to that value. In this case, the reduction rate R of the image is set as in equation (4).

$$R = fm/fN \quad \cdots (4)$$

where fN is the Nyquist frequency of the image.

Instead of the maximum value fm of the frequency component, a frequency f'm at a given area may be used as shown in Fig. 13. It is noted that for transformation into the frequency component, not only DCT but any desired transform such as Fourier transform or Wavelet transform may also be used.

Thus, in the embodiment of Fig. 12(b), the taking situation for each area is judged from the frequency component for each area made up in an 8×8 pixel unit.

The processing at the image taking system 30 in the third embodiment of the invention takes place through the following steps. First, the image signal of an image is read in. Subsequently, the taking situation is acquired at the taking situation assessment block 2008. Then, a given signal processing is implemented at the signal processing block 109. Then, the resolution of the image signal is changed at the amount-of-information change block 2007a. Then, tone transformation processing is applied at the tone transformation block 2010 to all pixels or all areas.

In the first, second, and third embodiments as described above, it is always necessary to implement assessment processing at the amount-of-information change block 107, 1007, and 2007a. Although depending on the taking situation, however, it is acceptable to implement assessments at the tone transformation block 110, and 2010 by the predetermined tone transformation characteristics without making assessments at the amount-of-information change block 107, 1007, and 2007a, as described at the following (a), (b) and (c). Although depending on an user's order, it is also acceptable to implement assessments at the tone transformation block 110, and 2010 by the predetermined tone transformation characteristics without making assessments at the amount-of-information change block 107, 1007, and 2007a, as described at the following (d). It is thus possible to obtain high-quality image signals without changing the amount of information in a given taking situation or depending on a user's order, and improve processing speeds.

(a) In the first embodiment, the control block 113 receives the result of assessment at the taking situation assessment block 108 to make an assessment of whether or not the taking situation is a given one. And, with the taking situation assessed as a given one, the control block 113 controls the image signal from the buffer 105 in such a way as to enter the signal processing block 109 without subjecting it to processing at the amount-of-information change block 107.

(b) In the second embodiment, the control block 1013 receives the result of assessment at the taking situation assessment block 1008 to make an assessment of whether or not the taking situation is a given one. And, with the taking situation assessed as a given one, the control block 1013 controls the image signal from the buffer 105 in such a way as to enter the signal processing block 1009 without subjecting it to processing at the amount-of-information change block 1007.

(c) In the third embodiment, the control block 2013 receives the result of assessment at the taking situation assessment block 2008 to make an assessment of whether or not the taking situation is a given one. And, with the taking situation assessed as a given one, the control block 2013 controls the image signal from the buffer 109 in such a way that the tone transformation block 1010 applies tone transformation to it with the predetermined tone transformation characteristics without subjecting it to processing at the amount-of-information change block 2007a, correction coefficient calculation block 2007b and correction coefficient modification block 2007c.

(d) The control block 113, 1013, and 2013 receives a user's order by way of the external I/F block 114 before the full-taking. And when the user's order to the effect that there is no change in the amount of information is received, the control block 113, 1013, and 2013 is controlled in such a way as not to implement processing at the taking situation assessment block 108, 1008 and 2008, processing at the amount-of-information change block 107, 1007 and 2007a and processing at the correction coefficient calculation block 2007a and correction coefficient modification block 2007c. And in the first and the second embodiment, the control block 113, and 1013 controls the image signal from the buffer 105 in such a way as to enter the signal processing block 109. In the third embodiment, the control block 2013 controls the image signal from the signal processing block 109 such that the tone transformation block 2010 applies tone transformation it with the predetermined tone transformation characteristics.

As described above, in the first, the second and the third embodiment, the bit length or resolution of the image signal is changed depending on the taking situation, and tone transformation processing is implemented depending on the tone transformation characteristics obtained using the image signal with the bit length or resolution changed. It is thus possible to obtain images of high quality depending on the taking situation at a proper processing speed depending on the taking situation.

POSSIBLE UTILISATION OF THE INVENTION IN THE INDUSTRY

According to the invention as described above, it is possible to provide an image taking system and an image signal processing program capable of efficiently generating image signals of high quality.

## Claims

**1.** An image taking system adapted to apply tone transformation processing to an image signal of an image taken by an image taking means, **characterized by** comprising a taking situation assessment means adapted to assess a taking situation for said image, an amount-of-information change means adapted to change an amount of information of said image signal depending the taking situation assessed at said taking situation assessment means, and a tone transformation means adapted to implement tone transformation processing depending on tone transformation characteristics obtained using an image signal with an amount of information changed by said amount-of-information change means.

2. The image taking system according to claim 1, **characterized by** further comprising a taking situation reception means adapted to receive from a user a taking situation setting at the time of taking said image, wherein said taking situation assessment means makes an assessment of a taking situation for said image depending on a taking situation received at said taking situation reception means.

3. The image taking system according to claim 1, **characterized in that** said taking situation assessment means makes an assessment of a taking situation from said image signal.

4. The image taking system according to claim 1, **characterized in that** said taking situation assessment means comprises a focusing position calculation means adapted to figure out a focusing position at a taking time and a luminance distribution calculation means adapted to figure out a luminance distribution of a taken image signal, wherein a taking situation is assessed on the basis of a focusing position figured out at said focusing position calculation means and a luminance distribution figured out at said luminance distribution calculation means.

5. The image taking system according to claim 1, **characterized in that** said taking situation assessment means comprises a focusing position calculation means adapted to figure out a focusing position at a taking time and a luminance distribution calculation means adapted to figure out a luminance distribution of a taken image signal, wherein a taking situation is assessed on the basis of a combination of classification by a focusing position figured out at said focusing position calculation means and classification by a luminance distribution figured out said luminance distribution calculation means.

6. The image taking system according to claim 1, **characterized in that** said taking situation assessment means makes an assessment of a taking situation on the basis of results of comparison of a shutter speed at a taking time and a luminance of a taken image with a given threshold value.

7. The image taking system according to claim 1, **characterized in that** said taking situation assessment means comprises a first assessment portion adapted to make an assessment of a taking situation on the basis of whether or not a shutter speed at a taking time and a luminance of a taken image have a given relation to a given threshold value and a second assessment portion adapted to make an assessment of a taking situation after assessed at said first assessment portion and on the basis of a focusing position at a taking time and a luminance distribution of a taken image, wherein a taking situation is assessed by said first assessment portion and said second assessment portion.

8. The image taking system according to claim 1, **characterized in that** said amount-of-information change means is adapted to change a resolution of said image signal, thereby changing an amount of information of said image signal.

9. The image taking system according to claim 1, **characterized by** further comprising a tone transformation characteristic calculation means adapted to figure out a first correction coefficient for implementing tone transformation from tone transformation characteristics obtained using an image signal with a resolution changed by said amount-of-information change means and change said calculated first correction coefficient to a second correction coefficient corresponding to a resolution of the image signal before said resolution is changed, wherein said tone transformation means implements tone transformation using said second correction coefficient.

10. The image taking system according to claim 1, **characterized in that** said amount-of-information change means is adapted to change a bit length of said image signal, thereby changing an amount of information of said image signal.

11. The taking system according to claim 1, characterize in that said taking situation assessment means is adapted to make an assessment of a taking situation for each of multiple areas forming said image, and said amount-of-information change means is adapted to change an amount of information of an image signal corresponding to said areas depending on a taking situation for each of said areas.

12. The taking system according to claim 11, **characterized in that** said taking situation assessment means is adapted to make an assessment of a taking situation by either one of color information found on the basis of said image signal and luminance information found on the basis of said image signal.

**13.** The image taking system according to claim 11, **characterized in that** said taking situation assessment means is adapted to make an assessment of a taking situation for each of said areas depending on an amount of a high-frequency component of a spatial frequency in said areas.

**14.** The image taking system according to claim 11, **characterized in that** said amount-of-information change means is adapted to change a bit length of the image signal corresponding to each of said multiple areas depending on a taking situation for each of said areas, thereby changing an amount of information of said image signal.

**15.** The image taking system according to claim 1, **characterized by** further comprises a means adapted to stay away from an amount-of-information change processing, wherein said means is controlled such that there is no processing by said amount-of-information change means.

**16.** An image signal processing program, **characterized by** letting a computer implement a step of reading an image signal of an image therein, a step of making an assessment of a taking situation for said image, a step of changing an amount of information of said image signal depending on said assessed taking situation, and a step of implementing tone transformation processing depending on tone transformation characteristics obtained using the image signal with said amount of information changed.

**17.** An image signal processing program, **characterized by** letting a computer implement a step of reading an image signal of an image therein, a step of making an assessment of a taking situation for each of multiple areas forming said image, a step of changing an amount of information of an image signal corresponding to each of said areas depending a taking situation for each of said areas, and a step of implementing tone transformation processing depending on tone transformation characteristics obtained using the image signal with said amount of information changed.

FIG. 1

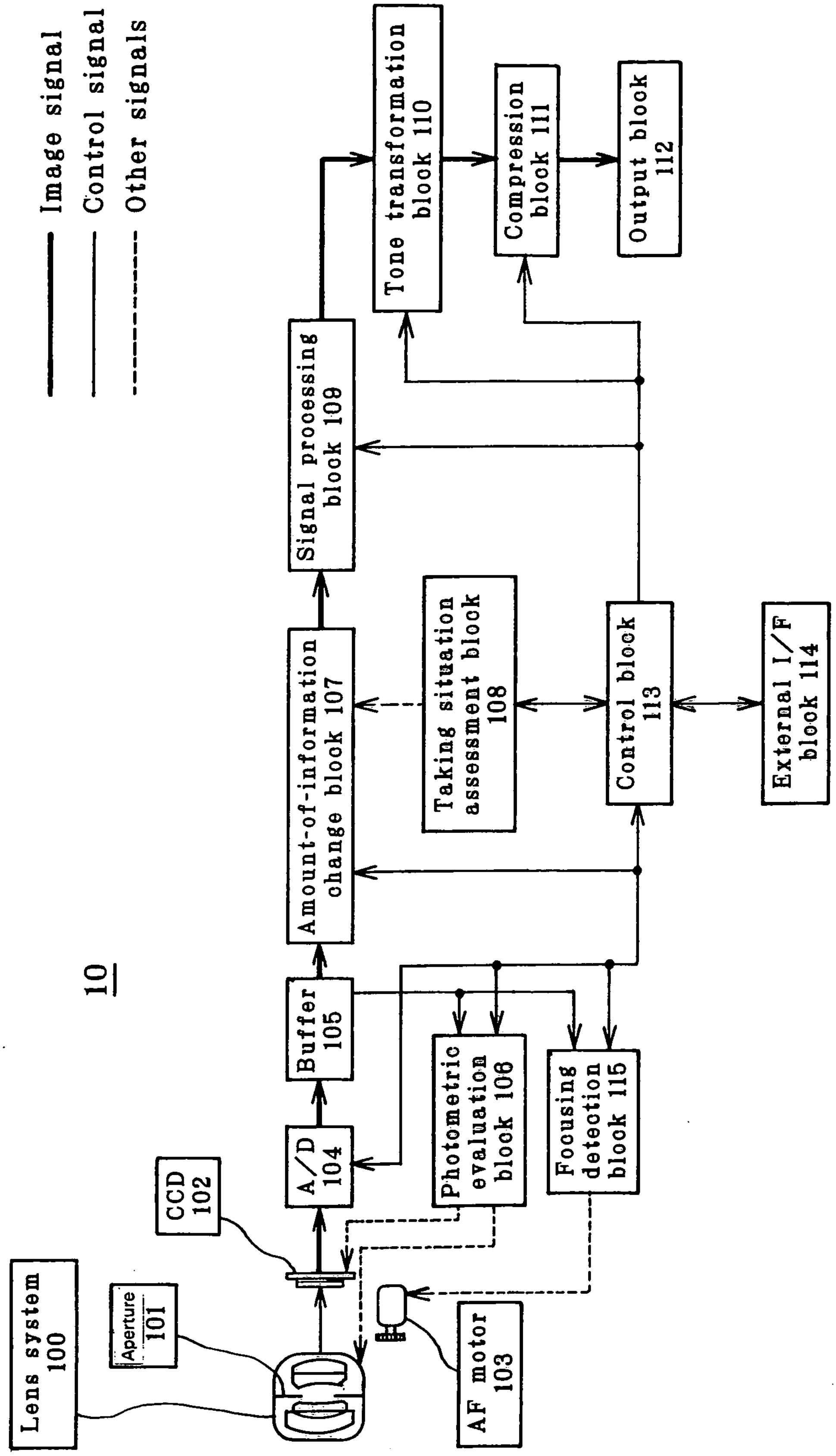
10
Image signal
Control signal
Other signals
Lens system 100
Aperture 101
CCD 102
AF motor 103
A/D 104
Buffer 105
Photometric evaluation block 106
Amount-of-information change block 107
Taking situation assessment block 108
Signal processing block 109
Tone transformation block 110
Compression block 111
Output block 112
Control block 113
External I/F block 114
Focusing detection block 115

FIG. 2

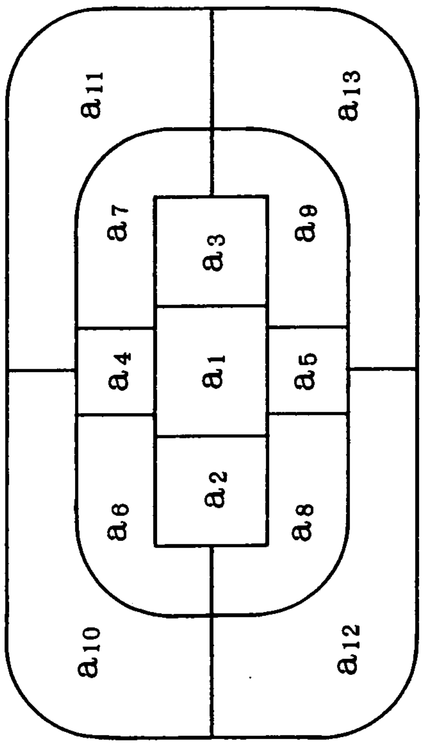

FIG. 3

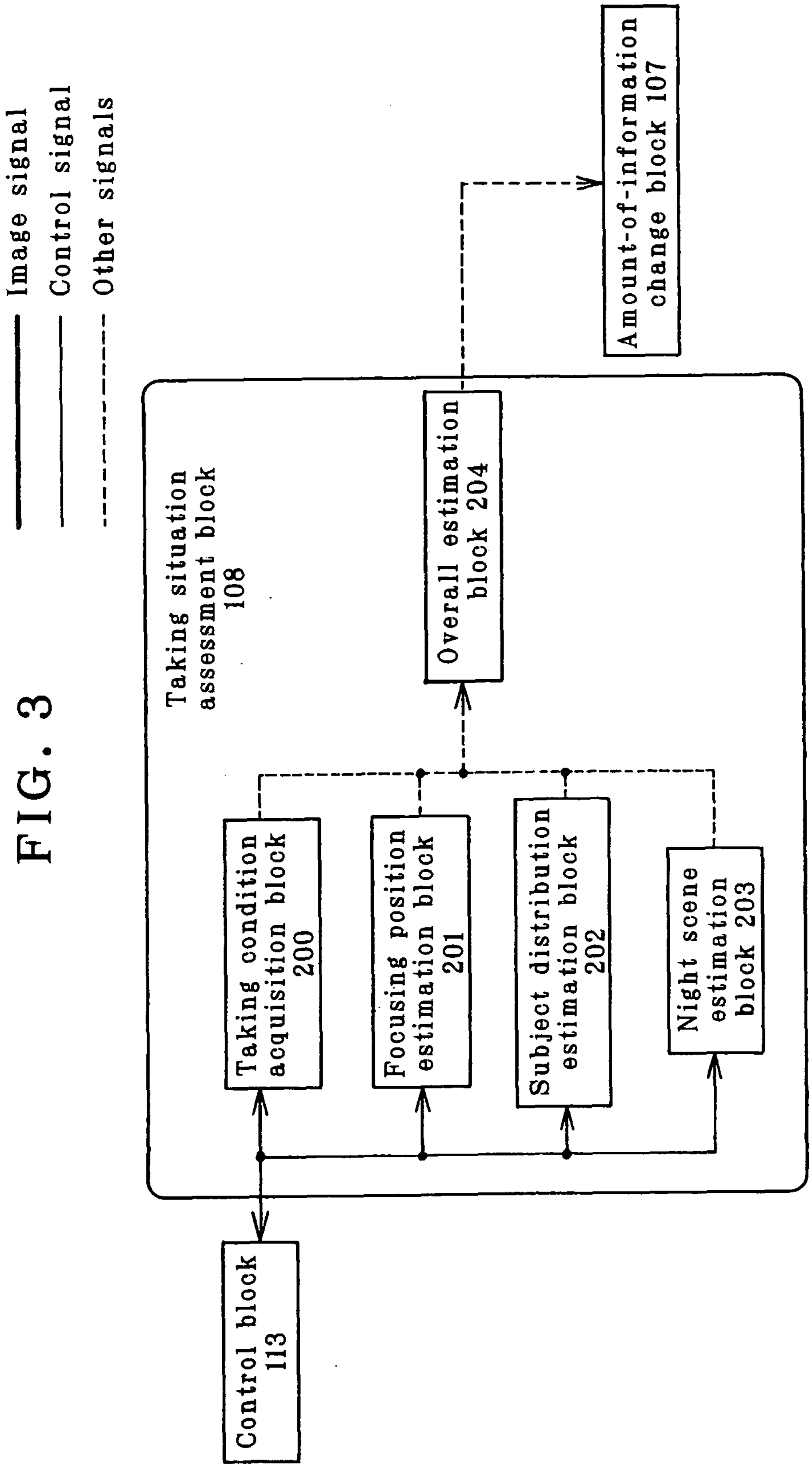
Image signal
Control signal
Other signals
Taking situation assessment block 108
Overall estimation block 204
Amount-of-information change block 107
Taking condition acquisition block 200
Focusing position estimation block 201
Subject distribution estimation block 202
Night scene estimation block 203
Control block 113

FIG. 4

| AF information | AE information | Taking situation | Bit length |
|---|---|---|---|
| $5m \sim \infty$ | $S_3 > Th_1$ | Scene with the sky above | 14 |
| | $S_3 \leqq Th_1$ | Scene with no or little sky above | 12 |
| $1m \sim 5m$ | $S_2 > Th_2$ | Portrait photography for one single figure | 12 |
| | $S_2 \leqq Th_2$ | Portrait photography for multiple figure | 10 |
| Less than 1m | $S_1 > Th_3$ | Close-up photography for multiple objects | 12 |
| | $S_1 \leqq Th_3$ | Close-up photography for one single object | 10 |

FIG. 5

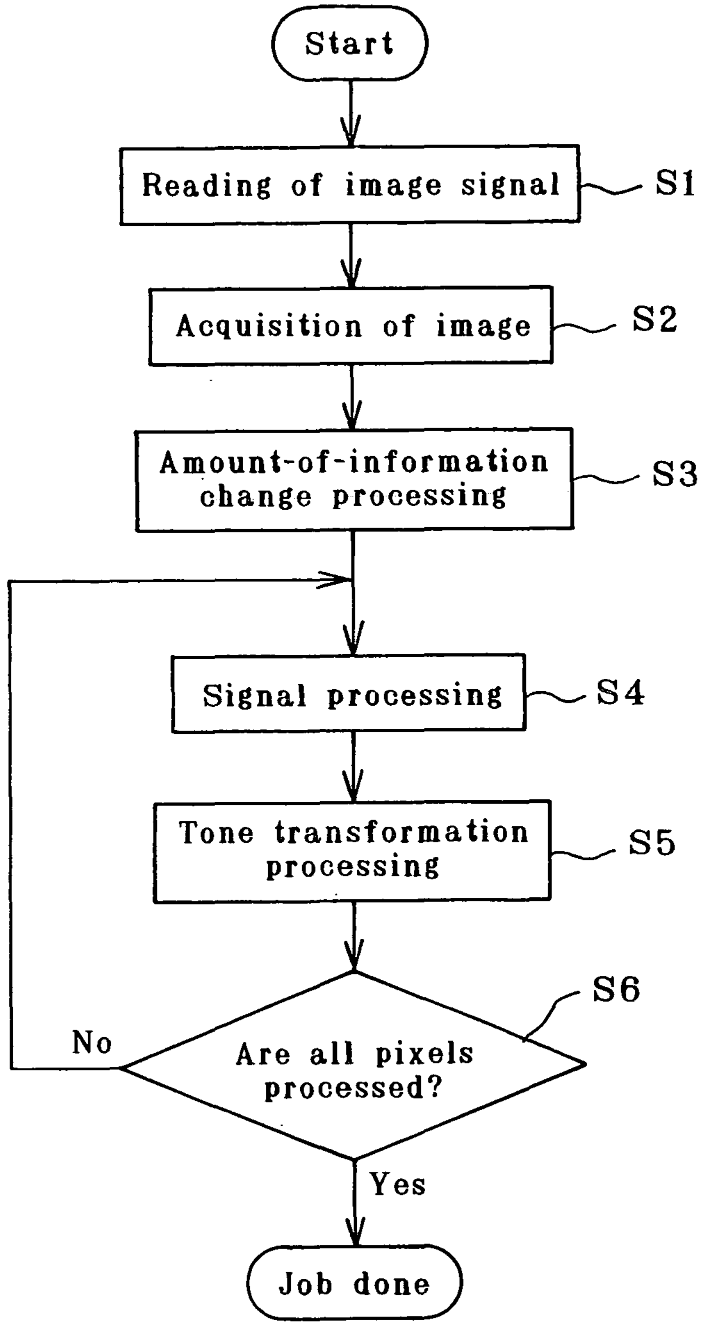
Start
Reading of image signal
S1
Acquisition of image
S2
Amount-of-information change processing
S3
Signal processing
S4
Tone transformation processing
S5
Are all pixels processed?
S6
No
Yes
Job done

# FIG. 6

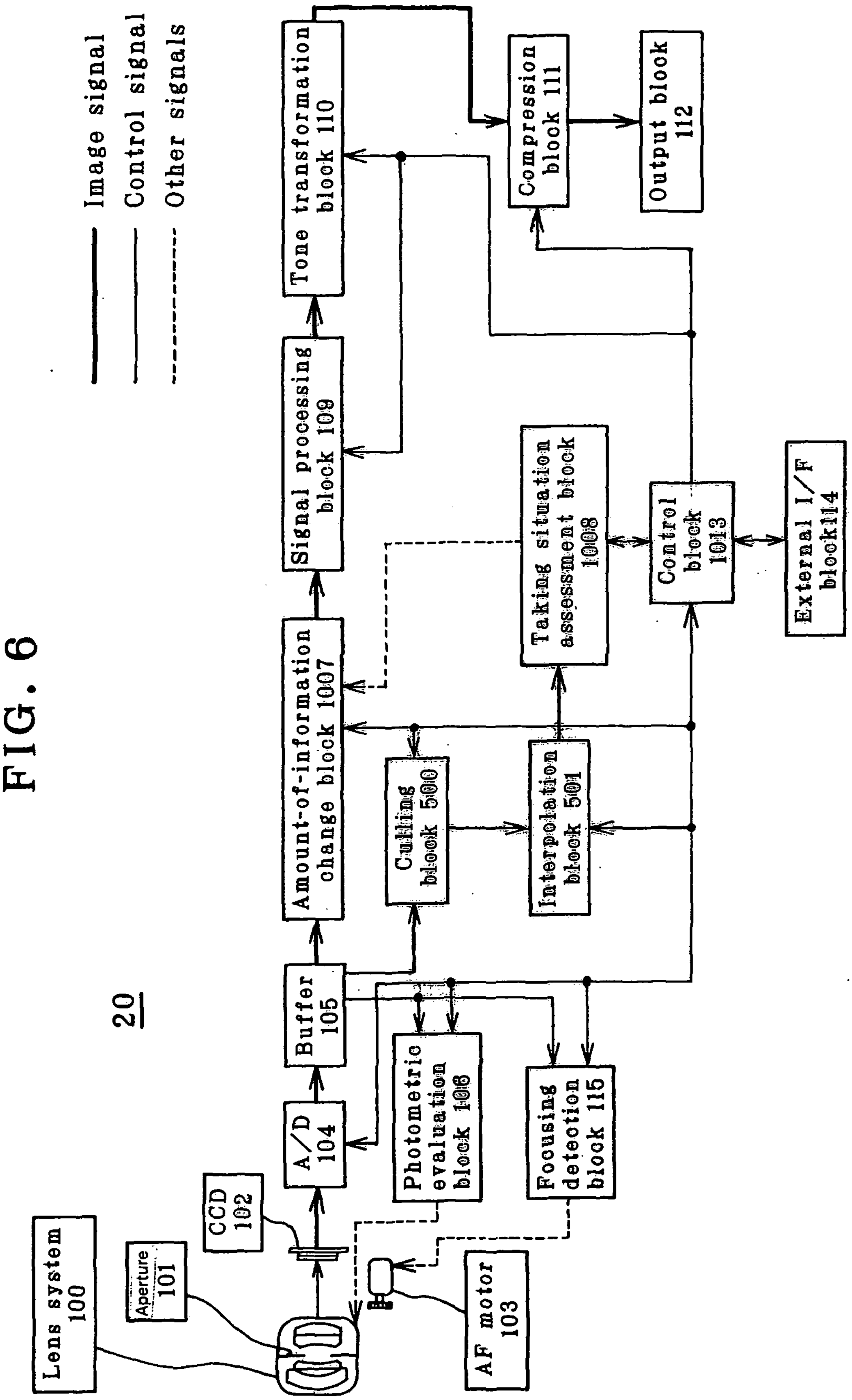
20
Image signal
Control signal
Other signals
Lens system 100
Aperture 101
CCD 102
AF motor 103
A/D 104
Buffer 105
Photometric evaluation block 106
Focusing detection block 115
Culling block 500
Interpolation block 501
Amount-of-information change block 1007
Taking situation assesment block 1008
Control block 1013
External I/F block114
Signal processing block 109
Tone transformation block 110
Compression block 111
Output block 112

FIG. 7

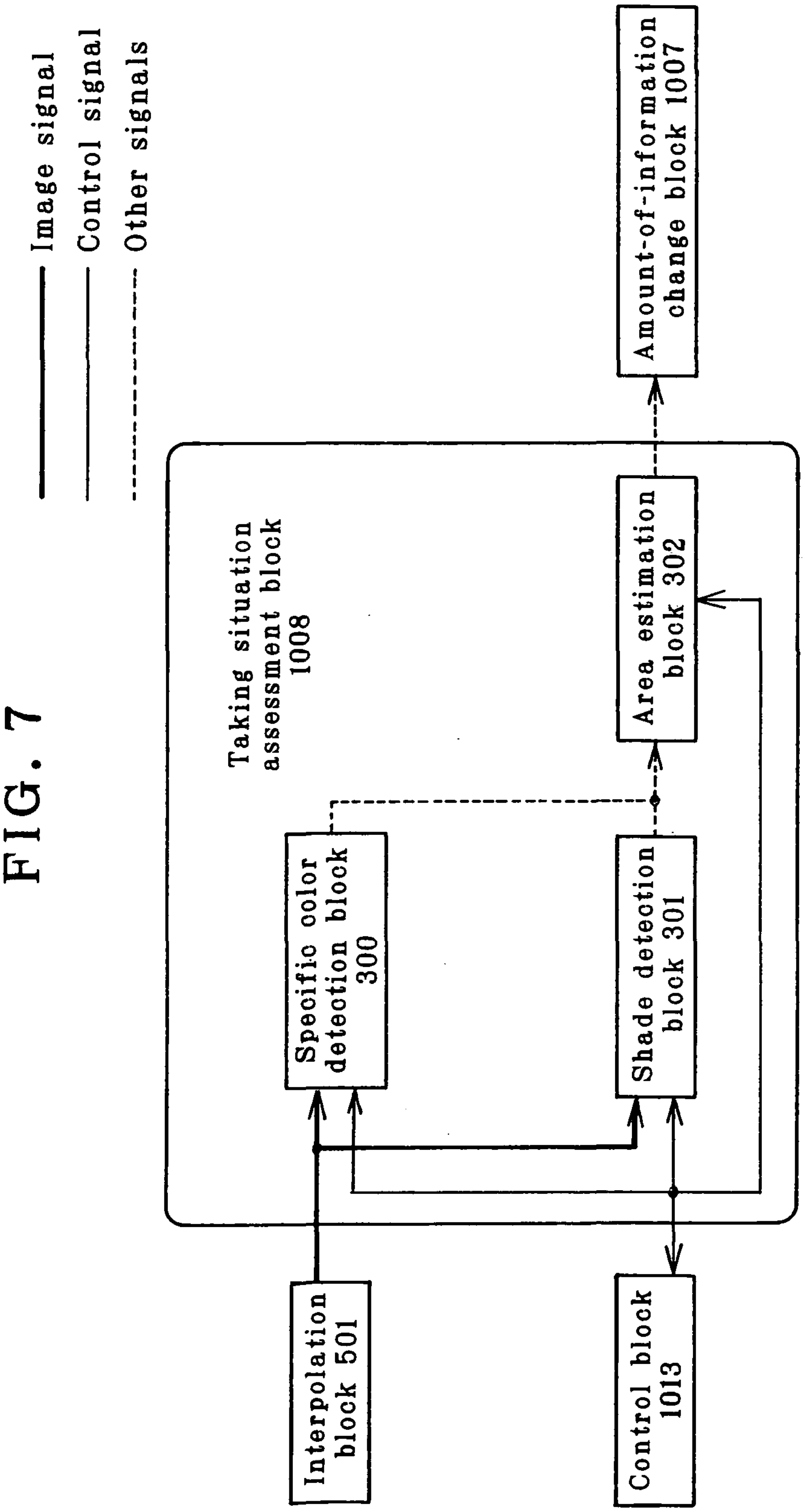
Image signal
Control signal
Other signals
Taking situation assessment block 1008
Specific color detection block 300
Shade detection block 301
Area estimation block 302
Amount-of-information change block 1007
Interpolation block 501
Control block 1013

FIG. 8

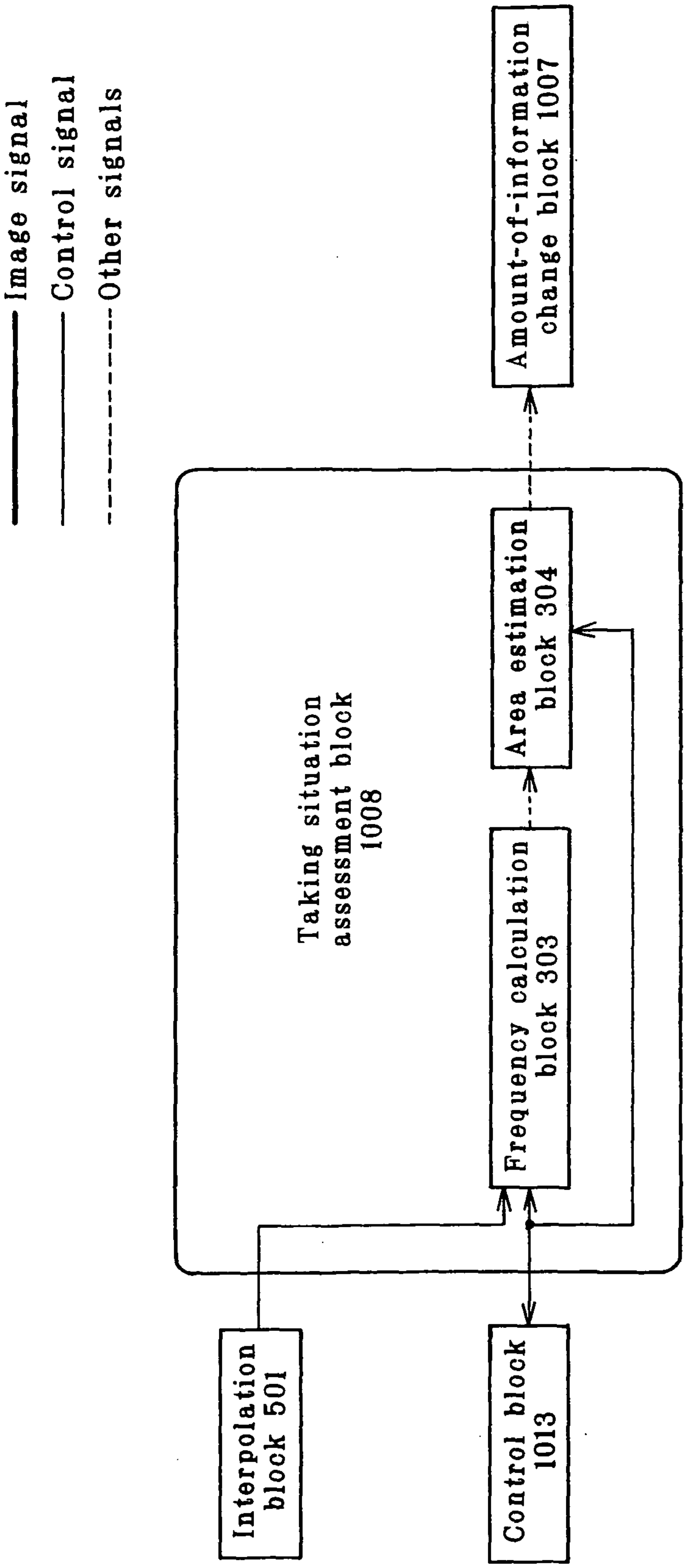
Image signal
Control signal
Other signals
Interpolation block 501
Control block 1013
Taking situation assessment block 1008
Frequency calculation block 303
Area estimation block 304
Amount-of-information change block 1007

FIG. 9

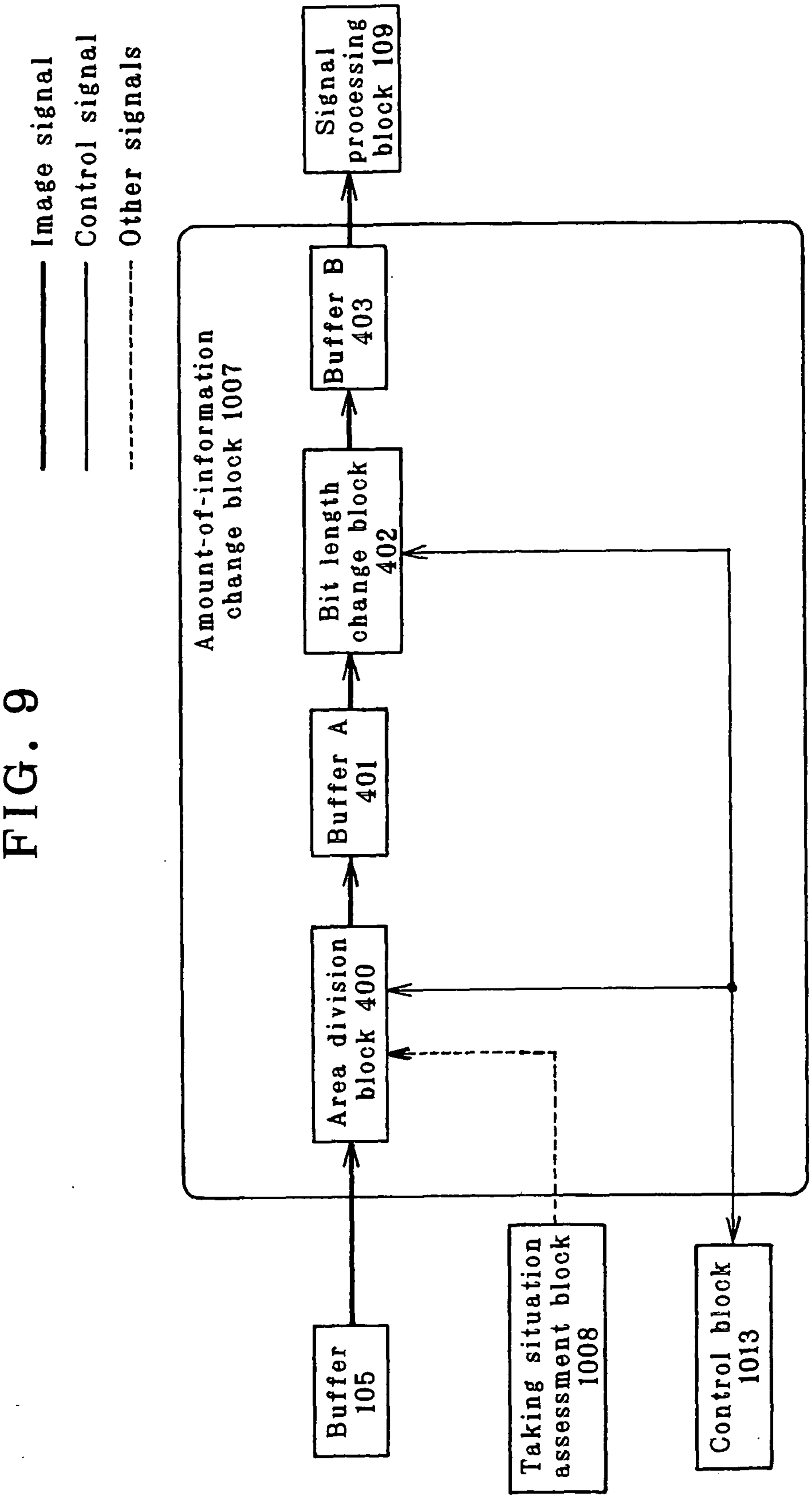
Image signal
Control signal
Other signals
Signal processing block 109
Amount-of-information change block 1007
Buffer B 403
Bit length change block 402
Buffer A 401
Area division block 400
Buffer 105
Taking situation assessment block 1008
Control block 1013

FIG. 10

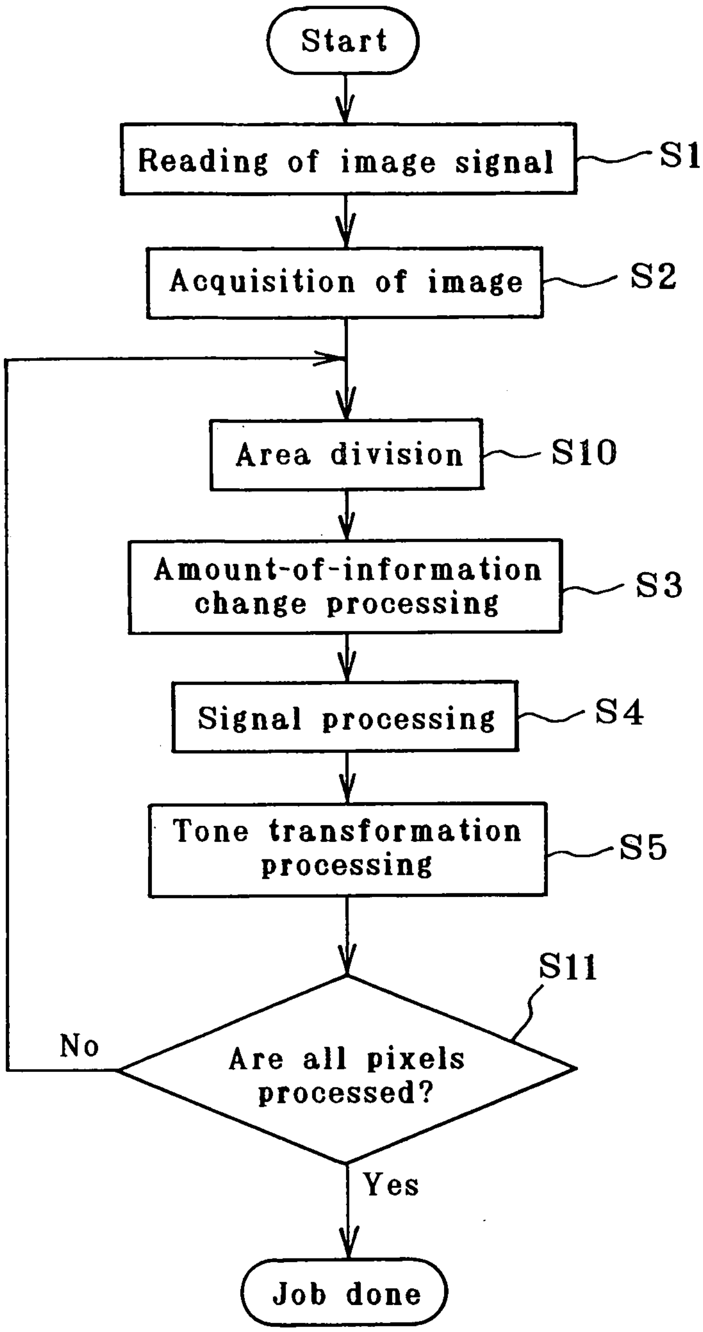
Start
Reading of image signal
S1
Acquisition of image
S2
Area division
S10
Amount-of-information change processing
S3
Signal processing
S4
Tone transformation processing
S5
S11
No
Are all pixels processed?
Yes
Job done

FIG. 11

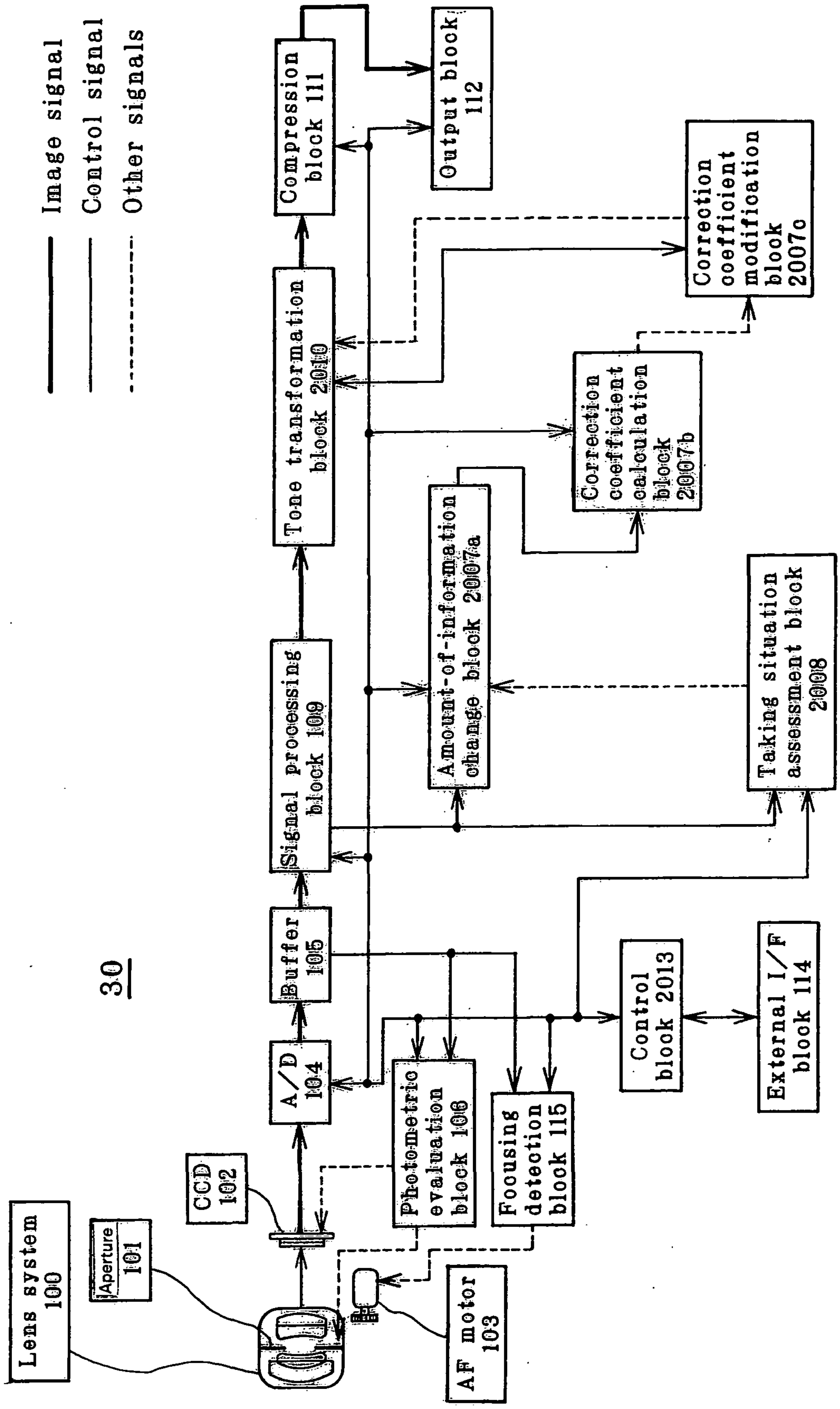
30
Image signal
Control signal
Other signals
Lens system 100
Aperture 101
CCD 102
AF motor 103
A/D 104
Buffer 105
Photometric evaluation block 106
Focusing detection block 115
Signal processing block 109
Tone transformation block 2010
Compression block 111
Output block 112
Amount-of-information change block 2007a
Correction coefficient calculation block 2007b
Correction coefficient modification block 2007c
Taking situation assessment block 2008
Control block 2013
External I/F block 114

FIG. 12(a)

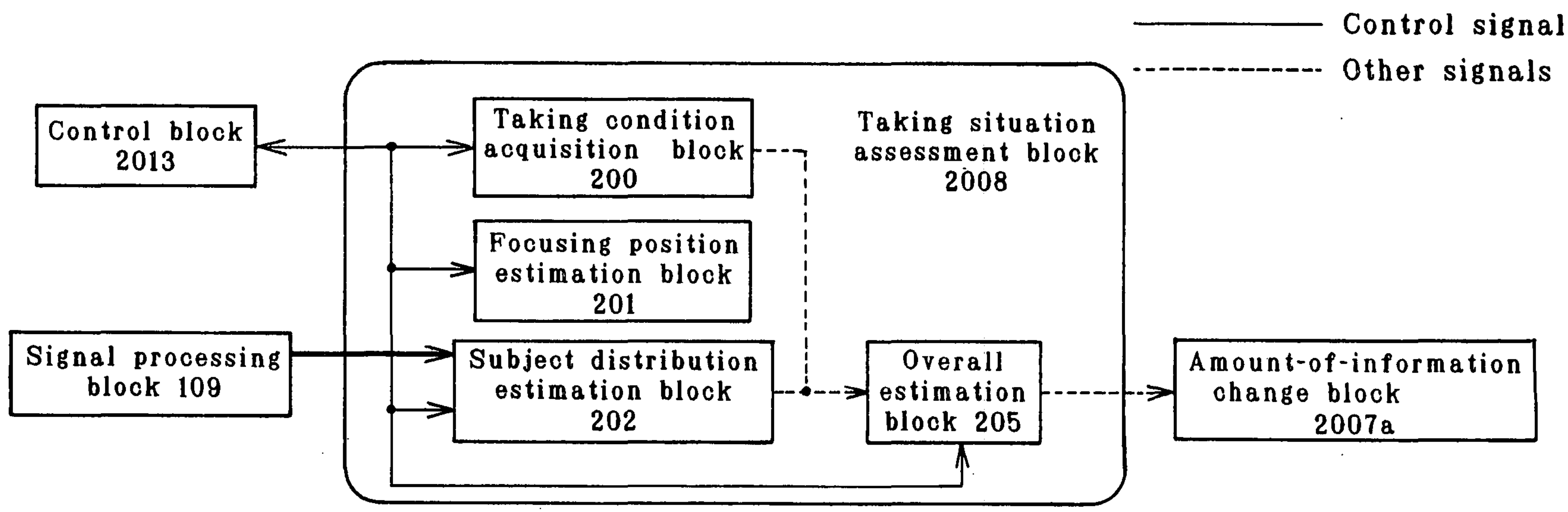


FIG. 12(b)

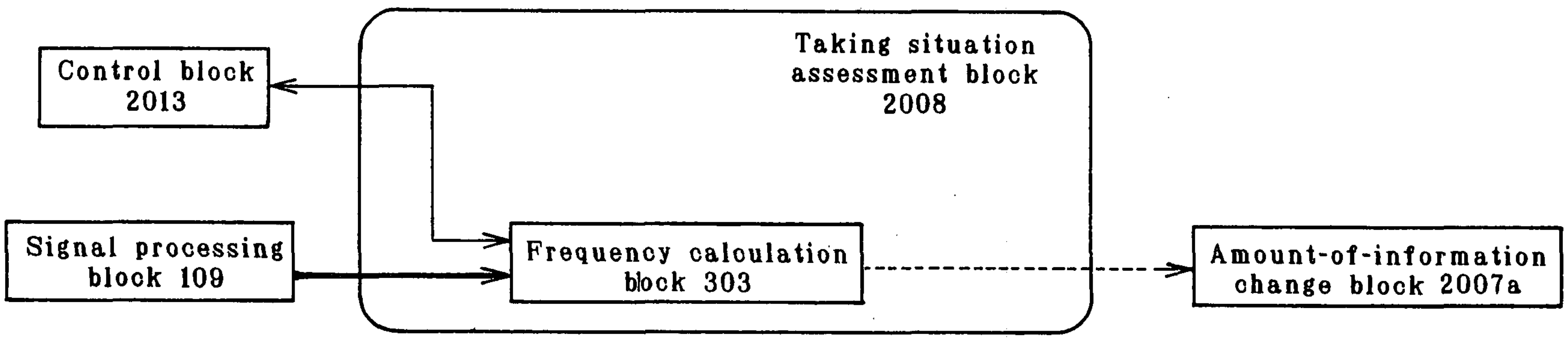

FIG. 13

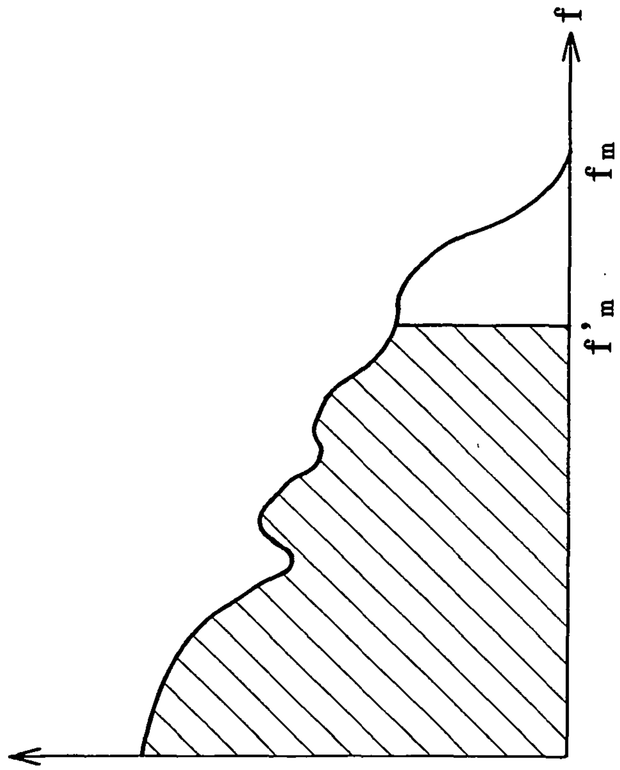

**INTERNATIONAL SEARCH REPORT**

International application No.
PCT/JP2006/307409

A. CLASSIFICATION OF SUBJECT MATTER
*H04N5/20*(2006.01), *H04N5/243*(2006.01)

According to International Patent Classification (IPC) or to both national classification and IPC

B. FIELDS SEARCHED

Minimum documentation searched (classification system followed by classification symbols)
*H04N5/20*(2006.01), *H04N5/243*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-285700 A (NEC Corp.), 12 October, 2001 (12.10.01), Full text; all drawings & US 2001/26648 A1 | 1-17 |
| A | JP 2004-242068 A (Konica Minolta Holdings Kabushiki Kaisha), 26 August, 2004 (26.08.04), Full text; all drawings & US 2004/151376 A1 & EP 1445731 A2 | 1-17 |
| A | JP 2004-179930 A (Matsushita Electric Industrial Co., Ltd.), 24 June, 2004 (24.06.04), Full text; all drawings (Family: none) | 1-17 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>19 May, 2006 (19.05.06) | Date of mailing of the international search report<br>30 May, 2006 (30.05.06) |
| Name and mailing address of the ISA/<br>Japanese Patent Office<br>Facsimile No. | Authorized officer<br>Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003069821 A
- WO 3465226 A